# EUROPÄISCHE PATENTSCHRIFT

(11) **EP 3 491 281 B1**
(45) Veröffentlichungstag und Bekanntmachung des Hinweises auf die Patenterteilung: **31.12.2025**
(21) Anmeldenummer: 17752284.4
(22) Anmeldetag: 27.07.2017
(51) Int. Cl.: F16L 37/098, F16L 37/14

(54) **ANSCHLUSSVERBINDER UND ANORDNUNG EINES HALTEELEMENTS UND EINER VERRIEGELUNGSEINRICHTUNG DAFÜR**
CONNECTOR AND ARRANGEMENT OF A HOLDING ELEMENT AND A LOCKING DEVICE THEREFOR
CONNECTEUR ET AGENCEMENT D'UN ÉLÉMENT DE MAINTIEN ET D'UN DISPOSITIF DE VERROUILLAGE POUR CELUI-CI

(30) Priorität: 29.07.2016 DE 102016009168
(43) Veröffentlichungstag der Anmeldung: 05.06.2019
(73) Patentinhaber: Voss Automotive GmbH, 51688 Wipperfürth (DE)
(72) Erfinder: KLEIN, Roland, 51688 Wipperfürth (DE); HEINRICHS, Eugen, 51702 Bergneustadt (DE)
(74) Vertreter: Rebbereh, Cornelia
(86) Internationale Anmeldenummer: PCT/EP2017/000907
(87) Internationale Veröffentlichungsnummer: WO 2018/019421

(56) Entgegenhaltungen:
- EP-A1- 1 369 634
- WO-A1-2015/180875
- WO-A1-89/09361
- DE-A1- 102004 053 538
- DE-A1- 102009 019 395
- DE-A1- 102014 211 844
- DE-U1- 20 213 806
- US-A1- 2008 252 071

## Beschreibung

Die Erfindung betrifft einen Anschlussverbinder, insbesondere für Schlauch- und/oder Rohrleitungen, umfassend zumindest einen Muffenteil und zumindest einen Steckerteil, wobei der Steckerteil in einen Muffenabschnitt des Muffenteils einsteckbar oder eingesteckt ist und wobei zumindest ein Halteelement zum lösbaren Halten des Steckerteils in dem Muffenteil vorgesehen ist und wobei der Steckerteil mit dem Halteelement versehbar oder versehen ist und das Halteelement in zumindest einem Abschnitt radial aufweitbar ist und zumindest einen Haltearm mit zumindest einer außenseitig auskragenden Rastnase aufweist, wobei der zumindest eine Haltearm ein freies Ende und ein am Halteelementkörper festes Ende aufweist und in radiale Richtung bezüglich des Steckerteils federelastisch bewegbar ist zum Verrasten der zumindest einen Rastnase an zumindest einer Verrastungsfläche oder einer Verrastungsöffnung des Muffenteils und Lösen von dieser, und wobei zumindest eine Verriegelungseinrichtung zum Sichern des Verrastungszustands von Steckerteil und Muffenteil und zum Anzeigen einer Fehlmontage von diesem vorgesehen ist, wobei die zumindest eine Verriegelungseinrichtung mit dem zumindest einen Halteelement zusammen wirkt.

Anschlussverbinder mit Steckerteil und Muffenteil sind in den unterschiedlichsten Ausführungsvarianten im Stand der Technik bekannt. Um den Steckerteil im Muffenteil zu sichern, ist es ebenfalls bekannt, Halteelemente zu diesem Zweck vorzusehen. Diese sind in unterschiedlichsten Ausgestaltungen bekannt. Beispielsweise besteht nach der EP 0 999 398 B1 ein Steckverbinder für Schlauch- und/oder Rohrleitungen aus einem Muffenteil und einem Steckerteil, wobei der Steckerteil mit einem Steckerschafft in eine Aufnahmeöffnung des Muffenteils eingesteckt wird. Der gesteckte Steckerteil wird gegen das Muffenteil über eine Umfangsdichtung abgedichtet sowie über eine Verriegelungseinrichtung gegen Herausziehen arretiert. Innerhalb des Muffenteils ist ein hohlzylindrischer, axial in den eingesteckten Steckerschaft eingreifender Steckzapfen angeordnet. Die Verriegelungseinrichtung besteht aus zumindest zwei diametral gegenüber liegenden, sich axial in Löserichtung etwa parallel zur Steckachse erstreckenden, in axialer Richtung federelastischen Rastarmen des Steckerteils, wobei die Rastarme im eingestecktem Zustand jeweils eine in der Aufnahmeöffnung des Muffenteils gebildete Hinterschneidungsfläche formschlüssig hintergreifen. Die Verriegelungseinrichtung ist einteilig mit dem Steckerteil ausgebildet.

Aus der DE 86 04 217 U1 ist eine weitere Steckverbindung für Druckmittelleitungen, insbesondere zum Anschluss von Bremsleitungen an einen Bremsventilkörper, bekannt, die aus einem Gehäuse und einem in eine Anschlussbohrung des Gehäuses mit seinem Steckerschaft einsteckbaren Stecker mit Durchgangsöffnung besteht. Der Stecker ist mittels eines Halteelements in axialer Richtung gegen Verschieben gehalten und mittels einer zwischen Steckerschaft und Gehäuse angeordneten Umfangsdichtung abgedichtet. Gegenüber dem Gehäuse ist der Stecker durch eine formschlüssige Verbindung gegen Verdrehen fixiert. Die formschlüssige Verbindung besteht aus zwei am Umfang des Steckerschafts angeordneten, mit diesem verdrehfest verbundenen Rastelementen, die in Durchbrüchen des Gehäuses im eingesteckten Zustand des Steckers einrasten, die Rastelemente bestehen aus Rastzungen. Ferner ist eine Sicherungskappe über die Einstecköffnung geschoben und deckt diese mit ihrem Kappenboden ab. Mit ihrer Außenwandung umfasst sie das Gehäuse. Das Halteelement besteht aus einem Bajonettverschluss, der von einer auf dem Steckerschaft angeordneten Arretierungshülse und dem Gehäuse gebildet wird. Mit einem Aufbau der Steckverbindung wird lediglich eine radiale Lösebewegung verhindert.

Die EP 2 224 156 A2 bzw. die US 2008/0252071 A1 offenbart einen Steckverbinder für Medienleitungen, der einen Steckerteil umfasst, der mit einem Steckerschaft dichtend in eine Aufnahmeöffnung eines Verbindergegenstücks eingesteckt und diesem gegenüber rastend lösbar gegen Herausziehen arretiert werden kann. Die Rastmittel bestehen aus zumindest zwei Rastarmen des Steckerteils, die sich zur Steckachse etwa parallel in Löserichtung erstrecken und in radialer Richtung federelastisch ausgebildet sind. Die Rastarme hintergreifen im eingesteckten Zustand jeweils eine innerhalb der Aufnahmeöffnung des Verbindergegenstücks vorhandene Raststufe form- oder kraftschlüssig. Der Steckerteil ist mit den Rastarmen als einstückiges, monolithisches Formteil ausgebildet. Ein Verriegelungselement ist derart beweglich mit dem Steckerteil verbunden, dass es in einer Sicherungsstellung die Rastmittel gegen Lösen blockiert und in einer Lösestellung für eine die Arretierung aufhebende Lösebewegung freigibt. Die Rastmittel sind ferner derart ausgebildet, dass in Einsteck- und Löserichtung unterschiedliche Kräfte zu überwinden sind. Ein Demontieren erfolgt durch Angreifen an Endabschnitten der Rastarme, die aus dem Verbindergegenstück herausragen und benachbart zu dem Steckerteil angeordnet sind.

Die EP 1 106 896 B1 offenbart eine weitere Steckverbindung für Druckmittelleitungen, die aus einem Gehäuseteil und einem Steckerteil besteht. Der Steckerteil ist mit seinem Steckerschaft dichtend in eine Aufnahmeöffnung des Gehäuseteils eingesteckt und mittels eines separaten Halteelements mit in radialer Richtung elastisch beweglichen Haltemitteln lösbar arretiert. Dies geschieht dadurch, dass das Halteelement in einer Arretierstellung mit den Haltemitteln zwischen einer inneren Ringstufe in der Aufnahmeöffnung und einer äußeren Ringstufe des Steckerschafts sitzt, wobei das Halteelement derart in axialer Richtung zwischen einer Sicherungsstellung und einer Freigabestellung verschiebbar auf dem Steckerschaft sitzt, dass die Haltemittel in der Sicherungsstellung gegen eine radiale Lösebewegung blockiert und in der Freigabestellung für eine radiale Lösebewegung freigegeben werden. Zwischen dem Steckerteil und dem Halteelement ist ein Federelement so angeordnet, dass das Halteelement selbsttätig durch Federkraft in die Sicherungsstellung und gegen die Federkraft in die Freigabestellung gebracht werden kann. Es erfolgt eine axiale Montage und eine Demontage durch eine axiale Hebebewegung durch Angreifen an dem Halteelement mittels eines Löse- bzw. Hebewerkzeugs. Außer dem Halteelement ist das Vorsehen des Federelementes erforderlich, um das gewünschte Arretieren zu ermöglichen.

Aus der FR 2 930 621 A1 ist eine weitere Ausführungsvariante eines Steckverbinders für eine Leckölleitung bekannt. Zum Verrasten sind bei dieser Lösung einerseits ein ringförmiges Haltelement, das den Steckerteil teilweise umgibt, und andererseits ein zungenförmiges Verrastungselement vorgesehen, das in einen Spalt des ringförmigen Haltelements eingreift, damit Verriegelungsmittel in ihrer Verriegelungsposition sind und eine Deformation des ringförmigen Halteelements aus seiner Blockierposition in seine Freigabeposition verhindert wird.

Die DE 39 24 173 A1 offenbart ferner eine Anschlussarmatur, bestehend aus einem Anschlusselement, das eine Aufnahmebohrung für ein mit einem Befestigungswulst versehenes Rohrende und einen das Rohrende umgreifenden Dichtring aufweist. Zu seiner Befestigung im Anschlusselement ist auf das Rohrende eine in die Aufnahmebohrung einsteckbare Buchse aufgeschoben, die einen in radialer Richtung elastisch verformbaren Bereich aufweist. Dieser ist in seiner Bohrung mit einer über den Befestigungswulst rastbaren Nut versehen und bildet ein in eine Nut im Anschlusselement eingreifende Rastsperre. Das Rohrende wird durch einfachen Steckvorgang mit dem Anschlusselement verbunden und durch Öffnen der Rastsperre wieder gelöst.

Aus der US 6,688,654 B2 ist ein einstückiger Verbinder mit einem rohrförmigen Element und einem Kragen bekannt. Ein Paar diametral einander gegenüberliegender Betätigungsarme hängt von dem Kragen herab und liegt in einer ersten Ebene. Ein Paar diametral einander gegenüberliegender Verriegelungsarme hängt ebenfalls von dem Kragen herab und liegt in einer zweiten Ebene, die zu der ersten Ebene senkrecht steht. Die Verriegelungsarme dienen dem Ineinandergreifen mit einem Rand am Ende einer Leitung. Sie können zwischen einer Verriegelungsposition und einer Entriegelungsposition bewegt werden, in Abhängigkeit von der Bewegung der Betätigungsarme.

Aus der WO 2015/058857 A2 ist ferner ein Anschlussverbinder, umfassend einen Muffenteil und einen Steckerteil, bekannt, wobei der Steckerteil in eine Aufnahmeöffnung des Muffenteils eingesteckt ist und wobei ein Haltelement zum lösbaren Verrasten des Steckerteils in dem Muffenteil vorgesehen ist. Haltelement und Steckerteil sind zweiteilig ausgebildet und das Halteelement radial aufweitbar und auf dem Aufnahmeabschnitt des Steckerteils verliersicher und verdrehsicher montiert. Das Halteelement weist zumindest einen Haltearm mit außenseitig auskragender Haltenase auf, wobei sich der Haltearm etwa parallel zur Steckachse des Steckerteils erstreckt und in radialer Richtung bezüglich des Steckerteils federelastisch bewegt werden kann, um die Haltenase mit einer Verrastungsfläche des Muffenteils in Verrastung zu bringen bzw. zu entriegeln. Zum geführten Angreifen eines Lösewerkzeugs an dem Halteelement zum Lösen der Verbindung von Steckerteil mit Halteelement und Muffenteil sind Führungsflächen bzw. Führungsabschnitte an dem Halteelementkörper benachbart zu dem freien Ende des zumindest einen Haltearms vorgesehen.

Die DE 10 2004 053 538 A1 offenbart eine Kupplungsvorrichtung zum Verbinden von Leitungen mit einer Halteeinrichtung, die ein Außenteil und ein im Außenteil angeordnetes Innenteil aufweist. Das Außenteil und das Innenteil sind zwischen einer Arretierstellung und einer Lösestellung relativ zueinander und in Längsrichtung der Halteeinrichtung bewegbar, wobei zumindest eine, bezogen auf die Längsachse der Halteeinrichtung, geneigt angeordnete Keilfläche am Außenteil vorgesehen ist, die mit zumindest einer komplementär ausgebildeten Keilfläche zusammenwirkt, die am Innenteil vorgesehen ist.

Die WO 2015/180875 A1 offenbart einen Steckverbinder zum Verbinden zumindest einer Fluidleitung mit einer anderen Fluidleitung oder einem Aggregatanschluss, umfassend ein Gehäuse mit einem Durchgangskanal, wobei ein Ende des Gehäuses als Muffenabschnitt zum Einstecken eines Gegensteckverbinders ausgebildet ist und Rastmittel zum lösbaren Fixieren des Gegensteckverbinders aufweist. Die Rastmittel sind Bestandteil einer in den Muffenabschnitt steckbaren Adapterhülse, die im Muffenabschnitt mittels radial elastischer Formschlusselemente gehalten ist, und eine Durchgangsöffnung für einen Steckerschaft des Gegensteckverbinders aufweist. Die Rastmittel sind aus zumindest zwei in Bezug auf eine Längsmittelachse des Steckverbinders radial elastischen Rastarmen gebildet und am Umfang der Adapterhülse durch schlitzförmige Freischnitte in deren Hülsenwandung ausgebildet. Die Rastarme weisen an ihren freien Enden radial in Richtung auf die Längsmittelachse verlaufende Rastnocken auf, wobei die Formschlusselemente aus am äußeren Umfang der Adapterhülse zwischen den Rastarmen ausgebildeten, radial elastischen Rastfortsätzen bestehen, die im eingesteckten Zustand in Ausnehmungen der Umfangswand des Muffenabschnitts formschlüssig rastend eingreifen. Die Rastnocken weisen einen radialen Abstand zur Längsmittelachse auf, der kleiner ist als ein Innenradius der Durchgangsöffnung. Ein radialer Abstand der Rastarme in Bezug auf die Längsmittelachse ist zumindest in einem an die Rastnocken angrenzenden Bereich gleich dem Innendurchmesser der

Durchgangsöffnung oder kleiner als der Innendurchmesser der Durchganasöffnung. Die EP1369634A1 offenbart einen Anschlussverbinder für die Verwendung beim Verbinden von Rohrleitungen für Flüssigkeiten, und im Speziellen einen Anschlussverbinder mit Überprüfungsfunktion, um eine Bestätigung, ob die Rohrleitungsverbindung vollständig durchgeführt wurde, von der Außenseite zu ermöglichen. Der vorliegenden Erfindung liegt nun die Aufgabe zugrunde, einen Anschlussverbinder nach dem Oberbegriff des Anspruchs 1 dahingehend fortzubilden, dass der Verrastungszustand von Muffenteil und Steckerteil gesichert und eine Fehlmontage von Muffenteil und Steckerteil schnell erkannt werden kann, um einen solchen Anschlussverbinder insbesondere bei Durchleiten von unter Druck stehendem Medium durch diesen noch sicherer zu gestalten. Die Aufgabe wird für einen Anschlussverbinder nach dem Oberbegriff des Anspruchs 1 dadurch gelöst, dass die zumindest eine Verriegelungseinrichtung ein radial steckbares Verriegelungselement ist, das mit dem Halteelement im Bereich von dessen zumindest einem Haltearm zusammenwirkt und radial bezüglich Halteelement bzw. Steckerteil und Muffenteil beweglich ist und das an dem Halteelement vormontiert und von einer Vormontageposition in eine Verriegelungsposition verschiebbar ist.

Die Aufgabe wird ferner durch eine Anordnung eines Halteelements und zumindest einer Verriegelungseinrichtung für einen solchen Anschlussverbinder nach Anspruch 15 gelöst. Weiterbildungen der Erfindung sind in den abhängigen Ansprüchen definiert. Dadurch wird ein Anschlussverbinder geschaffen, der zumindest einen Muffenteil und zumindest einen Steckerteil umfasst, die ineinander steckbar sind, wobei der Steckerteil in einen Muffenabschnitt mit Aufnahmeöffnung des Muffenteils eingesteckt wird. Zusätzlich zu dem zumindest einen Halteelement zum lösbaren Halten des Steckerteils in dem Muffenteil ist zumindest eine Verriegelungseinrichtung vorgesehen zum Verriegeln der Steckposition von Steckerteil und Muffenteil. Das zumindest eine Halteelement ist mit dem Steckerteil verbunden, insbesondere durch Aufstecken. Es ist verliersicher auf einem Aufnahmeabschnitt des Steckerteils montiert. Das Halteelement kann in zumindest einem Abschnitt radial aufgeweitet werden und weist zumindest einen Haltearm mit zumindest einer außenseitig auskragenden Rastnase auf, wobei der zumindest eine Haltearm ein freies Ende und ein am Halteelementkörper, also aufweist und in radialer Richtung bezüglich des Steckerteils federelastisch bewegt werden kann. Hierdurch ist es möglich, die zumindest eine Rastnase, die an dem Haltearm angeordnet ist, an einer Verrastungsfläche oder Verrastungsöffnung des Muffenteils zu verrasten bzw. aus der Verrastungsposition dort wieder zu lösen. Zum Sichern der Verrastung von Steckerteil und Muffenteil ist die zumindest eine Verriegelungseinrichtung vorgesehen, durch die auch das Anzeigen einer Fehlmontage von Steckerteil und Muffenteil ermöglicht wird. Die zumindest eine Verriegelungseinrichtung wird radial auf das Halteelement aufgesteckt, wirkt dabei so mit dem Halteelement im Bereich von dessen Haltearm(en) zusammen, dass bei betätigter Verriegelungseinrichtung Steckerteil und Muffenteil nicht fertig montierbar, also Steckerteil und Muffenteil nicht vollständig ineinandersteckbar sind. Ferner wirkt die Verriegelungseinrichtung mit dem Halteelement am Steckerteil dahingehend zusammen, dass die Verriegelungseinrichtung lediglich bei vollständig gestecktem Steckerteil und Muffenteil freigegeben und in eine die Steckverbindung von Steckerteil und Muffenteil sichernde Position verbracht werden kann. Somit ist bereits optisch erkennbar, jedoch auch haptisch ertastbar, ob eine korrekte und vollständige Steckverbindung und Endposition, also eine vollständige Montage, von Steckerteil und Muffenteil vorliegt oder nicht. Ragt die Verriegelungseinrichtung beispielsweise über die Oberfläche des Anschlussverbinders in einer nicht vorgesehenen Weise hervor, ist optisch und haptisch feststellbar, dass eine Fehlmontage bzw. eine nicht vollständige Montage von Steckerteil und Muffenteil vorliegen muss. Wenn sich ferner Steckerteil und Muffenteil nicht vollständig ineinanderstecken lassen, da die Verriegelungseinrichtung in ihre unter normalen Bedingungen die vollständige Montage von Steckerteil und Muffenteil sichernde und sperrende Position verbracht ist, kann ebenfalls ohne Weiteres festgestellt werden, dass keine vollständige Montage von Steckerteil und Muffenteil vorliegt, somit die Gefahr besteht, dass, wenn Medium unter Druck durch den Anschlussverbinder in dieser Position von Steckerteil und Muffenteil hindurchgeleitet wird, ein Trennen von Steckerteil und Muffenteil droht. Gerade bei unter Druck stehenden Medien, die durch Schlauch- bzw. Rohrleitungen hindurchgesandt werden, die mit dem Anschlussverbinder versehen sind, droht Gefahr durch das unter Druck stehende Medium, das dann ggf. schlagartig die unvollständige Verbindung von Steckerteil und Muffenteil trennt und dort aus dem aufgetrennten Anschlussverbinder austritt. Um dies sicher vermeiden zu können, lässt sich optisch und haptisch eine Fehlmontage von Steckerteil und Muffenteil bzw. eine vollständige und unvollständige Montage von Steckerteil und Muffenteil durch die Verriegelungseinrichtung feststellen. Zusätzlich kann beispielsweise die zumindest eine zweite Verriegelungseinrichtung farbig ausgestaltet werden oder eine farbige Markierung aufweisen, ggf. alle Teile des Anschlussverbinders unterschiedlich farbig ausgestaltet oder markiert sein, so dass auch hierüber eine optische Kontrolle einer ordnungsgemäßen Steckposition von Steckerteil und Muffenteil und der Verriegelungseinrichtung durch optische Kontrolle der zumindest einen Verriegelungseinrichtung, also deren Positionierung am Anschlussverbinder, möglich ist.

Durch das Vorsehen der zumindest einen Verriegelungseinrichtung als radial steckbares Verriegelungselement, insbesondere ähnlich einer Halteklammer, ist beispielsweise eine optische und haptische Kontrolle eines ordnungsgemäßen Montagezustandes des Anschlussverbinders, also eines korrekten und vollständigen Steckzustandes von Steckerteil und Muffenteil ineinander dadurch möglich, dass man optisch und/oder haptisch kontrolliert, in welcher Position sich das radial steckbare Verriegelungselement befindet. Insbesondere kann ein unvollständiger Steckzustand bzw. eine Fehlmontage von Steckerteil und Muffenteil dadurch erkannt werden, dass das radial steckbare Verriegelungselement weit über die Oberfläche von Muffenteil und Steckerteil hinausragt und nicht mit dem Halteelement haltend ineinandergreift. Durch das Zusammenwirken mit dem zumindest einen Haltearm des Halteelementes ist es möglich, dass das radial steckbare Verriegelungselement diesen blockiert, solange kein vollständiger oder ein falscher Steckzustand, also eine Fehlmontage von Steckerteil und Muffenteil, vorliegt. Andererseits kann der Haltearm des Halteelementes ein Hineinstecken des radial steckbaren Verriegelungselementes in seine vollständig gesteckte Position so lange verhindern, wie sich der Haltearm nicht in der Verrastungsposition von dessen zumindest einer Rastnase an Verrastungsfläche bzw. Verrastungsöffnung des Muffenteils befindet. Besonders vorteilhaft ist daher das radial steckbare Verriegelungselement in der Draufsicht u-förmig mit zwei Schenkeln und einem zwischen diesen angeordneten Querabschnitt, wobei zumindest ein Abschnitt bzw. Sperrabschnitt der Schenkel oder an den Schenkeln zum Eingreifen zwischen dem freien Ende des zumindest einen Haltearms und dem Steckerteil dient. Zwischen dem freien Ende des Haltearms und der Außenseite des Steckerteils ist somit vorteilhaft im vollständig verrasteten Zustand von Halteelement und Verrastungsnut oder -öffnung oder -fläche im Muffenteil ein Abstand vorgesehen, wobei die Schenkel des radial steckbaren Verriegelungselementes bzw. der Verriegelungseinrichtung in Form eines solchen radial steckbaren Verriegelungselementes in diesen Abstand bzw. Spalt eingreifen und dementsprechend an dem Halteelement bzw. dessen Haltearmen angreifen kann. Die Schenkel des radial steckbaren Verriegelungselements weisen vorteilhaft Sperrabschnitte auf zum sperrenden Hintergreifen der Haltearme des Halteelements.

Das Vorsehen der zumindest einen Verriegelungseinrichtung dient somit einer sicheren Verriegelung von Steckerteil und Muffenteil des Anschlussverbinders aneinander und auch zum Anzeigen einer Fehlmontage von Steckerteil und Muffenteil. Die Verriegelungseinrichtung bzw. das radial steckbare Verriegelungselement ist dementsprechend radial bezüglich Halteelement bzw. Steckerteil und Muffenteil beweglich und vormontierbar bzw. vormontiert an dem Halteelement und kann von einer Vormontageposition in eine Verriegelungsposition verschoben werden. Durch die Verriegelungseinrichtung ist es möglich, in zweierlei Hinsicht eine ordnungsgemäße Steckposition von Steckerteil und Muffenteil aneinander abzufragen, da ein vollständiges radiales Einschieben der Verriegelungseinrichtung in Form eines radial steckbaren Verriegelungselementes nur dann möglich ist, wenn Steckerteil und Muffenteil vollständig gesteckt, somit vollständig aneinander montiert sind und sich in der gewünschten Endposition befinden. Vorteilhaft ist eine Transportsicherungsposition der Verriegelungseinrichtung vorgesehen, wobei zumindest ein Sperrabschnitt bzw. zumindest ein Sperrelement verhindert, dass die Verriegelungseinrichtung bei nicht vollständig gestecktem Steckerteil und Muffenteil, also, wenn die Steckverbindung nicht vollständig und sicher gesteckt ist, radial in seine Endposition verbringbar ist bzw. geschoben werden kann.

Wird das radial steckbare Verriegelungselement unsachgemäß und unter Krafteinwirkung in seine Endposition gebracht, ohne dass ein vollständiger Steckzustand von Steckerteil und Muffenteil vorliegt, ist in dieser Position dann kein Aufstecken des Muffenteils auf den Steckerteil mehr möglich, da dies durch das zwischen Haltearme und Steckerteil eingesteckte radial steckbare Verriegelungselement verhindert wird, da die Haltearme blockiert werden und somit ein Hintergreifen von Rastnase am Haltearm und Verrastungsfläche bzw. Verrastungsöffnung am Muffenteil verhindert wird. Somit wird bei vollständig eingestecktem radial steckbaren Verriegelungselement der Haltearm bzw. die Haltearme des Halteelementes blockiert, so dass diese nicht mehr in radialer Richtung bezüglich des Steckerteils bewegbar sind und dadurch ein Verrasten der zumindest einen Rastnase an zumindest einer Verrastungsfläche oder einer Verrastungsöffnung des Muffenteils verhindert wird.

Der zwischen den Schenkeln des radial steckbaren Verriegelungselementes angeordnete Querabschnitt ist vorteilhaft mit zumindest einem vorkragenden, in zumindest eine Öffnung in dem Halteelement eingreifbaren oder eingreifenden Sperrelement versehen. Besonders vorteilhaft ist das Sperrelement zungenartig und weist ein an dem Querabschnitt befestigtes oder festes Ende und ein freies Ende auf, wobei das freie Ende endseitig mit zumindest einem abstehenden nasenförmigen Rastabschnitt versehen ist. Der abstehende nasenförmige Rastabschnitt dient einerseits dazu, in eine Öffnung in dem Halteelement einzugreifen und zum Sichern des Sperrelements in der Öffnung gegen ein selbständiges Herausbewegen, wie Herausgleiten oder Herausrutschen, oder Lösen aus dieser Öffnung, andererseits dazu, ein Eingreifen durch Abstützen des nasenförmigen Rastabschnitts auf der Außenseite des Halteelements zu verhindern. Ohne Aufbringen einer Druckkraft quer zu dem Sperrelement gegen dieses verhindert der nasenförmige Rastabschnitt ein radiales Stecken des radial steckbaren Elements in seine vollständige Steckposition. Ferner hält eine Verliersicherung das radial steckbare Verriegelungselement hierbei in einer verliersicheren Position, so dass das einmal auf das Halteelement aufgesteckte radial steckbare Verriegelungselement verliersicher an dem Halteelement radial verschiebbar fixiert ist. Die Druckkraft zum Auslenken des Sperrelements, um dieses in eine fluchtende Position über der Öffnung zu bringen, kann durch den Muffenteil auf das Sperrelement ausgeübt werden. Beim Verbringen des radial steckbaren Verriegelungselementes in die vollständig gesteckte und somit die Haltearme des Halteelementes gegen ein ungewolltes Lösen des Steckerteils von dem Muffenteil haltende und verriegelnde Position greift das Sperrelement in die Öffnung in dem Halteelement ein und hält sich rastend mit dem nasenförmigen Rastabschnitt darin fest. Dementsprechend weist das Verriegelungselement, das auf den Steckerteil aufgesteckt wird, vorteilhaft im Bereich zwischen den zumindest zwei einander gegenüberliegenden Haltearmen die entsprechende Öffnung auf, in die das Sperrelement, insbesondere zungenartige Sperrelement, eingreifen und mit dem abstehenden nasenförmigen Rastabschnitt darin festhalten kann. Es ist somit eine doppelte Abfrage der Steckpositon des Steckerteils durch die Haltearme und das Sperrelement der Verriegelungseinrichtung bzw. des radial steckbaren Verriegelungselements möglich, wobei eine Abfrage die Position des Randes des Muffenteils betrifft und eine weitere Abfrage die vollständig (radial) nach außen ausgelenkte Position der Haltearme. Wenn der Steckerteil tief genug in den Muffenteil eingesteckt ist, kann der Muffenteil z.B. mit einem Rand oder einem vorkragenden oder vorstehenden Abschnitt an dem Sperrelement angreifen und dieses auslenken, so dass dieses über der Öffnung liegt und bei Aufbringen einer radial bezüglich des Halteelements gerichteten Druckkraft auf das radial steckbare Verriegelungselement dieses in seine vollständig gesteckte Position verbracht werden kann. In dieser werden die Haltearme daran gehindert, in radialer (Löse-) Richtung betätigt zu werden, was bei einer vollständig gesteckten Verbindung/Anschlussverbinder bewirkt, dass die Haltearme nicht in Löseposition gebracht werden können, und bei fehlendem Muffenteil bewirkt, dass dieses nicht mehr auf den Steckerteil aufgesteckt werden kann. In der vollständigen Steckposition des radial steckbaren Verriegelungselements an dem Halteelement liegt der endseitig am Sperrelement angeordnete Rastabschnitt in der Öffnung im Halteelement und hält sich in der Öffnung bzw. an deren Rand fest. Die Verriegelungseinrichtung kann somit vorteilhaft nur dann vollständig in ihre Endposition verbracht bzw. gesteckt werden, wenn das Sperrelement in die Öffnung des Halteelements hineinragt bzw. der nasenförmige Rastabschnitt des Sperrelements in dieser Öffnung liegt und die Haltearme des Halteelements radial beweglich sind.

Das Sperrelement und der Rand oder der radial vorstehender Abschnitt des Muffenteils können somit so zusammenwirken, dass das Sperrelement durch den Rand oder den radial vorstehenden Abschnitt des Muffenteils freigegeben und in die Öffnung des Halteelements gelenkt wird. Ein solcher Rand oder ein solcher radial vorstehender Abschnitt insbesondere am Rand des Muffenteils drückt somit beim axialen Aufschieben des Muffenteils auf den Steckerteil gegen das zungenartige Sperrelement, so dass dessen endseitig angeordneter nasenförmiger Rastabschnitt ausgelenkt und dadurch über die Öffnung in dem Halteelement verbracht wird. In dieser Position ist ein radiales Einschieben des radial steckbaren Verriegelungselements in die vollständige Steck- und somit Steckerteil und Muffenteil aneinander verriegelnde Position möglich. Der nasenförmige Rastabschnitt dient somit zum Verhindern eines radialen Verschiebens der Verriegelungseinrichtung in eine Verriegelungsposition, bei der das Sperrelement in die Öffnung in dem Halteelement eingreift, und zum Verhindern eines Zurückziehens des Sperrelements aus dieser Öffnung.

Ferner kann die Positionierung des radial steckbaren Verriegelungselementes, also dessen tatsächliche Steckposition bzw. eine Freigabeposition und eine Sperrposition der Verriegelungseinrichtung in Form des radial steckbaren Verriegelungselementes durch das Sperrelement abgefragt werden. Ein Eingreifen des Sperrelementes bzw. von dessen abstehendem nasenförmigen Rastabschnitt am Ende des zungenartigen Sperrelementes in die zumindest eine Öffnung in dem Halteelement ist bei ineinandergestecktem Steckerteil und Muffenteil nur bei vollständig korrekter Steckposition von Steckerteil und Muffenteil möglich. Somit wird bei ordnungsgemäßer vollständiger Steckung von Steckerteil und Muffenteil ein vollständiges Einstecken des radial steckbaren Verriegelungselementes freigegeben und bei Fehlmontage oder unvollständigem Stecken von Steckerteil und Muffenteil dementsprechend blockiert. Zugleich dient die zweite Verriegelungseinrichtung insbesondere in Form des radial steckbaren Verriegelungselementes der Sekundärverriegelung. Es wird hierüber somit ein versehentliches Lösen des Halteelementes aus der Verrastungsposition im Muffenteil sicher verhindert, da das vollständig gesteckte radial steckbare Verriegelungselement als Verriegelungseinrichtung ein Entriegeln oder Lösen des Halteelementes aus seiner Verrastungsposition am Muffenteil verhindert, da es an den ein solches Lösen gegebenenfalls bewirkenden Haltearmen angreift und diese in die Verrastungsposition drängt bzw. in dieser hält. Die Schenkel des radial steckbaren Verriegelungselementes weisen daher vorteilhaft eine solche Formgebung und einen solchen Abstand zueinander auf, dass sie bei vollständigem Aufstecken auf das Halteelement an zwei einander gegenüberliegenden Haltearmen angreifen und diese gegen eine radiale Lösebewegung in Richtung Steckerachse sperren. Dadurch, dass die Haltearme durch den entsprechenden Abschnitt der Schenkel des radial steckbaren Verriegelungselements daran gehindert werden, frei zu federn, vielmehr durch den entsprechenden Sperrabschnitt der Schenkel des radial steckbaren Verriegelungselementes radial beabstandet zu dem Steckerteil, gehalten werden, ist ein Verrasten der zumindest einen Rastnase des zumindest einen Haltearms des Halteelementes an der zumindest einen Verrastungsfläche oder Verrastungsöffnung des Muffenteils nicht mehr möglich, da die Rastnase radial zu weit vorsteht, um in Eingriff mit Rastfläche bzw. Verrastungsöffnung am Muffenteil zu kommen. Ist also das radial steckbare Verriegelungselement bei unsachgemäßer Behandlung und unter Überwinden der Sperrfunktion durch die Transportsicherung vermittels des zungenartigen Sperrelements mit nasenförmigem Rastabschnitt auf den Steckerteil bzw. dessen Halteelement vollständig, also in Endposition aufgesteckt, bevor der Muffenteil auf den Steckerteil vollständig aufgesteckt ist, ist ein solches vollständiges Aufstecken des Muffenteils auf dem Steckerteil aufgrund der zu weit radial vorstehenden Rastnasen an den Haltearmen des Halteelementes des Steckerteils nicht mehr möglich. Umgekehrt ist bei einem unvollständigen Steckvorgang von Steckerteil und Muffenteil ein vollständiges Einstecken des radial steckbaren Verriegelungselementes nicht möglich, da die Schenkel bzw. der entsprechende Sperrabschnitt der Schenkel des radial steckbaren Verriegelungselementes in den Bereich zwischen den freien Enden der Haltearme und dem Steckerteil nicht eingreifen kann, da bei einem unvollständigen Steckvorgang die Haltearme von dem Muffenteil zu weit radial in Richtung des Steckerteils gepresst werden, als dass die Schenkel des radial steckbaren Verriegelungselements dort zwischengreifen könnten. Es wird somit eine zusätzliche Absicherung vorgesehen. Dementsprechend ragt das radial steckbare Verriegelungselement bei einem unvollständigen Steckvorgang von Steckerteil und Muffenteil-über den äußeren Umfang des Steckerteils zumindest so weit hinaus, dass dies optisch und haptisch erkennbar ist. Erst wenn die Haltearme des Halteelementes frei sind, also deren Rastnasen die entsprechenden Verrastungsflächen bzw. Verrastungsfläche des Muffenteils untergreifen oder in entsprechende Verrastungsöffnungen in dem Muffenteil eingreifen und darin verrasten, ist es möglich, die Schenkel des radial steckbaren Verriegelungselementes mit dem entsprechenden Sperrabschnitt zwischen die Haltearme und den Steckerteil einzuschieben und hierdurch in die die Haltearme sperrende Position zu verbringen.

Der Steckerteil kann einerseits als monolitischer Steckerteil ausgebildet sein, wobei die Haltearme direkt am Körper des Steckerteils angeordnet, insbesondere mit diesem einstückig ausgebildet sind. Ferner ist es möglich, ein separates Halteelement auszubilden und auf einen Aufnahmeabschnitt des Steckerteils axial aufzufügen bzw. aufzuschieben. Steckerteil und Halteelement sind dann mehrteilig. Als vorteilhaft erweist es sich jedoch, eine Verliersicherung vorzusehen, um ein ungewolltes Lösen des Halteelementes von dem Steckerteil zu verhindern.

Das Halteelement weist vorteilhaft Haltearme mit nach innen und nach außen bezüglich des Halteelements gerichteten Rastnasen auf. Eine Kombination von nach außen und nach innen gerichteten und damit wirkenden Rastnasen an dem Halteelement dient nicht nur als Verliersicherung, sondern vor allem dem Verrasten des Haltelements auf dem Steckerteil. Hierbei nehmen die nach innen gerichteten Rastnasen die gleichen Kräfte auf wie die nach außen gerichteten Rastnasen.

Ferner erweist es sich als vorteilhaft, bei zweiteiligem Ausbilden von Steckerteil und Halteelement zumindest eines von beiden mit einer Verdrehsicherung zu versehen, um bei der Montage und im Betrieb ein ungewolltes Verdrehen von Steckerteil und Halteelement gegeneinander zu verhindern. Insbesondere kann der Steckerteil außenseitig in zumindest einem Abschnitt mehrkantig ausgebildet sein, um eine solche Verdrehsicherung vorzusehen. Ferner ist es möglich, dass auch der Muffenteil zumindest eine Verdrehsicherung aufweist, um den Muffenteil in der gewünschten Ausrichtung und Positionierung zu dem Steckerteil auf diesen aufstecken zu können. Insbesondere kann der Muffenteil zumindest ein vorkragendes Element und/oder zumindest eine gegen Verdrehen sichernde Fläche und/oder Formgebung aufweisen. Besonders vorteilhaft weist der Steckerteil und/oder das Halteelement, das auf diesen aufgefügt wird oder einstückig mit diesem ausgebildet ist, eine entsprechende Gegenfläche auf, so dass die sich berührenden Flächen von Muffenteil und Steckerteil bzw. Halteelement auf diesem das Verdrehen von Steckerteil und Muffenteil verhindern. Dies kann auch durch ein gegengleich ausgebildetes Element bzw. eine Nut, Aussparung oder Ausnehmung am Steckerteil bzw. am Halteelement, auf dem Steckerteil oder an dem Steckerteil vorgesehen werden, das/die mit dem zumindest einen vorkragenden Element am Muffenteil ineinandergreift und dementsprechend eine Verdrehsicherung und/oder Positionierhilfe für den Muffenteil gegenüber dem Steckerteil ausbildet. Ferner kann auch der Muffenteil eine Nut, Ausnehmung oder Aussparung oder eine entsprechende Hinterschnittfläche aufweisen, in die ein entsprechend vorkragendes Element am Steckerteil bzw. Halteelement auf diesem eingreift, um hierüber eine Verdrehsicherung und/oder Positionierhilfe zu bilden.

Als weiter vorteilhaft erweist es sich, wenn der Steckerteil, insbesondere der Aufnahmeteil an dem Steckerteil zum Aufnehmen des Halteelements, mit zumindest einer mit dem Halteelement zusammenwirkenden Einrichtung zur Druckverriegelung versehen ist, die ein Entriegeln des Halteelements bei im Innern des Anschlussverbinders anliegendem Druck verhindert. Bei Vorsehen einer Druckverriegelung ist das Vorsehen des Anschlussverbinders mit dem zumindest einen Steckerteil und dem zumindest einen Muffenteil ausreichend, wobei der Steckerteil in den Muffenabschnitt des Muffenteils eingesteckt werden kann, wobei das zumindest eine Halteelement zum lösbaren Halten des Steckerteils in dem Muffenteil vorgesehen ist und wobei der Steckerteil mit dem Halteelement versehbar oder versehen ist. Besonders bevorzugt umfasst die Druckverriegelungseinrichtung zumindest ein von der Außenseite des Aufnahmeabschnitts des Steckerteils vorkragendes Element, insbesondere zumindest einen vorkragenden Stift oder zumindest eine vorkragende Erhebung. Das Halteelement umfasst vorteilhaft zumindest eine Öffnung. Diese zumindest eine Öffnung ist vorteilhaft in (zumindest) einem der Haltearme des Halteelements angeordnet. Gerade bei im Innern des Anschlussverbinders anliegendem Druck, beispielsweise durch dort hindurchströmendes und unter Druck stehendes Medium, ist es wichtig, dass Steckerteil und Muffenteil sicher aneinander festgehalten werden. Bei Ausbilden von Steckerteil und Halteelement als zwei Teile, die aufeinander gesteckt werden, erweist es sich dementsprechend als vorteilhaft, das Halteelement bei im Innern des Anschlussverbinders anliegendem Mediendruck über die Druckverriegelungseinrichtung, insbesondere ein oder mehrere am Aufnahmeabschnitt des Steckerteils vorstehende Elemente, zu verriegeln und festzuhalten. Eine relative Axialbewegung zwischen Halteelement und Steckerteil wird durch Druckbeaufschlagung des Steckerteils hervorgerufen. Letzterer bewegt sich dabei axial in Gegensteckrichtung, also entgegen der Steckrichtung, während das Halteelement axial unverschieblich im Muffenteil fixiert ist. Zur Druckverriegelung liegt das vorkragende Element durch Verschiebung des Halteelements gegenüber dem Steckerteil in Axialrichtung des Halteelements vorteilhaft außerhalb einer Öffnung in dem Halteelement. Hierdurch wird ein radiales Bewegen des Haltearms oder der Haltearme blockiert. Es wird somit vorteilhaft ein solches axiales Spiel des Halteelements auf dem Aufnahmeabschnitt des Steckerteils vorgesehen, dass dieses mindestens ausreichend weit von der Öffnung zum Eintauchen des zumindest einen vorkragenden Elements entfernt ist, so dass sich die Haltearme dann nicht in einer Löseposition befinden, wenn das zumindest eine vorkragende Element sich außerhalb der Öffnung befindet. Durch die Axialverschiebung zwischen dem Steckerteil und dem Halteelement werden die vorkragenden Elemente aus dem Bereich der Öffnung(en) verschoben und sperren somit die Haltearme radial.

Ferner kann der Aufnahmeabschnitt Kanten aufweisen und/oder mehreckig bzw. mehrkantig ausgebildet werden und/oder sich in Längsrichtung des Steckerteils erstreckende vorstehende Elemente, wie Streben, aufweisen, die einerseits mit entsprechend gegengleich ausgebildeten Flächen oder Abschnitten des Halteelements ineinandergreifen, andererseits eine Verdrehsicherung zum Verhindern eines Verdrehens des Halteelementes auf dem Aufnahmeabschnitt des Steckerteils bewirken.

Als weiter vorteilhaft erweist es sich, wenn der Muffenteil aus zumindest einem Kunststoffmaterial besteht und mit der zumindest einer mantelseitigen Verrastungsöffnung versehen ist. Alternativ kann der Muffenteil als Zerspanungsteil ausgebildet sein, insbesondere aus zumindest einem Metall bestehen, und mit zumindest einer Hinterschnittfläche als Verrastungsfläche zum Verrasten der zumindest einen Rastnase des Haltearms des Halteelements versehen sein. Vorteilhaft weist somit der Muffenteil bei Ausbilden desselben aus zumindest einem Kunststoffmaterial eine mantelseitige Verrastungsöffnung auf, damit dort die zumindest eine Rastnase des zumindest einen Haltearms des Halteelements, das auf dem Steckerteil angeordnet ist oder wird, eingreifen kann. Alternativ kann der Muffenteil als Zerspanungsteil aus zumindest einem Metall ausgebildet sein. In diesem Falle weist er vorteilhaft eine Verrastungsfläche, die insbesondere eine Hinterschnittfläche ist, auf, damit dort die zumindest eine Rastnase des zumindest einen Haltearms des Halteelements, das auf dem Steckerteil angeordnet wird, eingreifen kann. Der Steckerteil kann somit sowohl mit einem Muffenteil aus einem Kunststoffmaterial als auch mit einem Muffenteil aus zumindest einem Metall kombiniert werden. Auch der Steckerteil kann aus zumindest einem Kunststoffmaterial oder zumindest einem Metall bestehen. Insbesondere der Steckerteil kann ferner als gerader Steckerteil oder Winkelsteckerteil oder in beliebiger, auch gekrümmter Formgebung ausgebildet werden.

Bei Vorsehen beispielsweise einer Mehrkantform, insbesondere Vierkantform, des Aufnahmeabschnitts des Steckerteils, auf dem das Halteelement aufgenommen ist bzw. sitzt, kann die Position von Halteelement mit darauf aufgesteckter Verriegelungseinrichtung, in 90°-Schritten auf dem Steckerteil bzw. um dessen Umfang herum variiert werden, um ein Betätigen der Verriegelungseinrichtung aus unterschiedlichen Betätigungsrichtungen zu ermöglichen. Dies erweist sich besonders dann als vorteilhaft, wenn der Anschlussverbinder schlecht zugänglich, beispielsweise in einem Fahrzeug, angeordnet ist oder wird, insbesondere in einem sehr beengten Raum. Durch die Möglichkeit, die Verriegelungseinrichtung in verschiedenen Positionen an dem Halteelement bzw. dem Steckerteil anzuordnen, ist eine große Flexibilität in Verbindung mit der Möglichkeit einer zusätzlichen Sperrung der Haltearme des Halteelementes gegeben. Durch das Anordnen des Verriegelungselements ist eine größere Widerstandskraft gegenüber seitlichen Belastungskräften, die auf den Anschlussverbinder einwirken, gegeben, ebenso wie gegenüber in Abzugsrichtung auf die Verbindung von Steckerteil und Muffenteil einwirkenden Kräften. Solche Abzugskräfte wirken in Löserichtung zum Lösen der Verbindung von Steckerteil und Muffenteil, also entgegen deren Steckrichtung. Kräfte in Abzugsrichtung können dadurch auftreten, dass Kräfte auf die jeweiligen Schlauch- bzw. Rohrleitungen, mit denen Steckerteil und Muffenteil verbunden sind, einwirken, die eben gerade in Abzugsrichtung bezüglich der Verbindung von Steckerteil und Muffenteil auf diese bzw. den Anschlussverbinder einwirken. Seitliche Belastungskräfte können im Betrieb beispielsweise in einem Fahrzeug bei dessen Betrieb, insbesondere bei Fahrten auf unebenem Gelände auftreten. Ferner können angrenzende Bauteile, wie z.B. andere Leitungen oder Kabelstränge, auf den Anschlussverbinder einwirken und Abzugskräfte ausüben. Durch die Verriegelungseinrichtung insbesondere in Form des radial steckbaren Verriegelungselementes wird jedoch die Verbindung von Steckerteil und Muffenteil aneinander zusätzlich gesichert, so dass hierdurch ein besonderer Schutz gegen auch Abzugskräfte und seitlich auf den Anschlussverbinder einwirkende Kräfte geschaffen werden kann.

Zur näheren Erläuterung der Erfindung werden im Folgenden Ausführungsbeispiele von dieser näher anhand der Zeichnungen beschrieben. Diese zeigen in:
- Figur 1: eine perspektivische Ansicht eines erfindungsgemäßen Anschlussverbinders mit Steckerteil und Muffenteil im Anlieferungszustand mit noch nicht gestecktem Steckerteil und Muffenteil, wobeider Steckerteil mit einem erfindungsgemäßen Halteelement und einer erfindungsgemäßen Verriegelungseinrichtung versehen ist,
- Figur 1a: eine Seitenansicht des Anschlussverbinders gemäß Figur 1,
- Figur 1b: eine gegenüber der Ansicht in Figur 1a um 90° gedrehte Seitenansicht des Anschlussverbinders gemäß Figur 1,
- Figur 1c: eine gegenüber der Ansicht in Figur 1a um 180° gedrehte und etwas vergrößerte Seitenansicht des Anschlussverbinders gemäß Figur 1,
- Figur 1d: eine Frontansicht des Steckerteils des Anschlussverbinders gemäß Figur 1 aus Richtung von dessen Dornabschnitt,
- Figur 1e: eine Längsschnittansicht des Anschlussverbinders gemäß Figur 1 entlang der Linie A-A aus Figur 1d,
- Figur 1f: eine Längsschnittansicht des Anschlussverbinders gemäß Figur 1 entlang der Linie B-B aus Figur 1d,
- Figur 2: eine perspektivische Ansicht des Anschlussverbinders gemäß Figur 1 in einer ersten unvollständigen Vormontage- oder Vor-Steckposition von Steckerteil und Muffenteil mit noch blockierten Haltearmen des Halteelements auf dem Steckerteil,
- Figur 2a: eine Seitenansicht des Anschlussverbinders gemäß Figur 2,
- Figur 2b: eine gegenüber der Ansicht in Figur 2a um 90° gedrehte Seitenansicht des Anschlussverbinders gemäß Figur 2,
- Figur 2c: eine gegenüber der Ansicht in Figur 2a um 180° gedrehte Seitenansicht des Anschlussverbinders gemäß Figur 2,
- Figur 2d: eine Querschnittsansicht des Anschlussverbinders nach Figur 2b entlang der Linie C-C,
- Figur 2e: eine Frontansicht des Steckerteils des Anschlussverbinders gemäß Figur 2,
- Figur 2f: eine Längsschnittansicht durch den Anschlussverbinder gemäß Figur 2 entlang der in Figur 2e eingezeichneten Linie B-B,
- Figur 2g: eine Längsschnittansicht durch den Anschlussverbinder gemäß Figur 2 entlang der Linie A-A aus Figur 2e,
- Figur 3: eine perspektivische Ansicht des Anschlussverbinders gemäß Figur 1 in der vollständig gesteckten Position von Steckerteil und Muffenteil mit freien Haltearmen des Halteelements auf dem Steckerteil und nicht sperrender, also freier, Verriegelungseinrichtung,
- Figur 3a: eine Seitenansicht des Anschlussverbinders gemäß Figur 3,
- Figur 3b: eine gegenüber der Ansicht in Figur 3a um 90° gedrehte Seitenansicht des Anschlussverbinders gemäß Figur 3,
- Figur 3c: eine gegenüber der Ansicht in Figur 3a um 180° gedrehte Seitenansicht des Anschlussverbinders gemäß Figur 3,
- Figur 3d: eine Querschnittsansicht durch den Anschlussverbinder gemäß Figur 3 entlang der in Figur 3b gezeigten Linie C-C,
- Figur 3e: eine Frontansicht des Steckerteils des Anschlussverbinders gemäß Figur 3,
- Figur 3f: eine Längsschnittansicht des Anschlussverbinders gemäß Figur 3, gezeigt entlang der Linie B-B aus Figur 3e,
- Figur 3g: eine Längsschnittansicht des Anschlussverbinders gemäß Figur 3, geschnitten entlang der Linie A-A aus Figur 3e,
- Figur 4: eine perspektivische Ansicht des Anschlussverbinders gemäß Figur 1 in einer bezüglich des Steckerteils und Muffenteils vollständig gesteckten Position mit ebenfalls sperrender, sich in ihrer Endposition befindender Verriegelungseinrichtung,
- Figur 4a: eine Seitenansicht des Anschlussverbinders gemäß Figur 4,
- Figur 4b: eine gegenüber der Ansicht in Figur 4a um 90° gedrehte Seitenansicht des Anschlussverbinders gemäß Figur 4,
- Figur 4c: eine gegenüber der in Figur 4a gezeigten Ansicht um 180° gedrehte Ansicht des Anschlussverbinders gemäß Figur 4,
- Figur 4d: eine Querschnittsansicht des Anschlussverbinders entlang der Linie C-C aus Figur 4b,
- Figur 4e: eine Frontansicht des Steckerteils des Anschlussverbinders gemäß Figur 4,
- Figur 4f: eine Längsschnittansicht durch den Anschlussverbinder gemäß Figur 4 entlang der Linie B-B aus Figur 4e,
- Figur 4g: eine Längsschnittansicht durch den Anschlussverbinder gemäß Figur 4 entlang der Linie A-A aus Figur 4e,
- Figur 5: eine perspektivische Ansicht einer zweiten Ausführungsform eines erfindungsgemäßen Anschlussverbinders mit Steckerteil und Muffenteil, wobei der Muffenteil als Zerspanungsteil ausgebildet ist, in einer vollständig gesteckten Position von Steckerteil und Muffenteil mit ebenfalls sich in sperrender oder verriegelnder Endposition befindender Verriegelungseinrichtung,
- Figur 5a: eine Seitenansicht des Anschlussverbinders gemäß Figur 5,
- Figur 5b: eine gegenüber der in Figur 5a gezeigten Ansicht um 90° gedrehte Seitenansicht,
- Figur 5c: eine gegenüber der in Figur 5a um 180° gedrehte Seitenansicht des Anschlussverbinders gemäß Figur 5,
- Figur 5d: eine Querschnittsansicht durch den Anschlussverbinder gemäß Figur 5, geschnitten entlang der Linie C-C aus Figur 5b,
- Figur 5e: eine Frontansicht des Steckerteils des Anschlussverbinders gemäß Figur 5,
- Figur 5f: eine Längsschnittansicht des Anschlussverbinders gemäß Figur 5, geschnitten entlang der Linie B-B aus Figur 5e,
- Figur 5g: eine Längsschnittansicht des Anschlussverbinders gemäß Figur 5, geschnitten entlang der Linie A-A gemäß Figur 5e,
- Figur 6: eine perspektivische Ansicht des Anschlussverbinders gemäß Figur 1, jedoch im Unterschied zu dieser mit in Endposition gesteckter Verriegelungseinrichtung und nicht montiertem Muffenteil,
- Figur 6a: eine Seitenansicht des Anschlussverbinders gemäß Figur 6,
- Figur 6b: eine gegenüber der Ansicht in Figur 6a um 90° gedrehte Seitenansicht des Anschlussverbinders gemäß Figur 6,
- Figur 6c: eine gegenüber der in Figur 6a um 180° gedrehte Seitenansicht des Anschlussverbinders gemäß Figur 6,
- Figur 6d: eine etwas vergrößerte Querschnittsansicht des Anschlussverbinders gemäß Figur 6, geschnitten entlang der Linie C-C aus Figur 6b,
- Figur 6e: eine Frontansicht des Steckerteils des Anschlussverbinders gemäß Figur 6,
- Figur 6f: eine Längsschnittansicht des Anschlussverbinders gemäß Figur 6, geschnitten entlang der Linie B-B aus Figur 6e,
- Figur 6g: eine Längsschnittansicht des Anschlussverbinders gemäß Figur 6, geschnitten entlang der Linie A-A aus Figur 6e,
- Figur 7: eine perspektivische Ansicht eines erfindungsgemäßen Winkelsteckerteils, der in seinem Aufnahmeabschnitt zum Aufnehmen eines Halteelementes außenseitig mit vorkragenden Elementen zum Ausbilden einer Druckverriegelungseinrichtung in Kombination mit einem dort aufgefügten Halteelement versehen ist,
- Figur 7a: eine Längsschnittansicht des Winkelsteckerteils gemäß Figur 7,
- Figur 8: eine perspektivische Ansicht einer weiteren Ausführungsform eines erfindungsgemäßen Winkelsteckerteils, bei dem der Aufnahmeabschnitt zum Aufnehmen eines Halteelementes mehrkantig ausgebildet ist zum Vorsehen einer Verdrehsicherung für das dort aufgefügte Halteelement,
- Figur 8a: eine Längsschnittansicht des Winkelsteckerteils gemäß Figur 8,
- Figur 9: eine perspektivische Ansicht eines als gerader Steckerteil ausgebildeten Steckerteils mit einem mit vorkragenden Elementen zum Ausbilden einer Druckverriegelungseinrichtung in Zusammenwirken mit einem auf dem Aufnahmeabschnitt des Steckerteils aufgefügten Halteelement versehenen vorkragenden Elementen,
- Figur 9a: eine Längsschnittansicht durch den Steckerteil gemäß Figur 9,
- Figur 10: eine perspektivische Ansicht eines geraden Steckerteils mit mehrkantigem Aufnahmeabschnitt zum Ausbilden einer Verdrehsicherung für ein dort aufgefügtes Halteelement,
- Figur 10a: eine Längsschnittansicht durch den Steckerteil gemäß Figur 10,
- Figur 11: eine perspektivische Ansicht des Muffenteils des Anschlussverbinders gemäß Figur 1,
- Figur 11a: eine Längsschnittansicht durch den Muffenteil gemäß Figur 11,
- Figur 12: eine perspektivische Ansicht des Muffenteils des Anschlussverbinders gemäß Figur 5,
- Figur 12a: eine Längsschnittansicht durch den Muffenteil gemäß Figur 12,
- Figur 13a: bis
- Figur 13e: verschiedene perspektivische Ansichten eines erfindungsgemäßen Halteelementes zum Auffügen auf einem Aufnahmeabschnitt eines Steckerteils eines Anschlussverbinders,
- Figur 13f: eine Draufsicht auf das Halteelement gemäß Figur 13a bis 13e,
- Figur 13g: eine erste Seitenansicht des Halteelementes gemäß Figur 13a bis 13e,
- Figur 13h: eine gegenüber der Ansicht in Figur 13g um 90° gedrehte Seitenansicht des Halteelementes gemäß Figur 13a bis 13e,
- Figur 13i: eine gegenüber der Ansicht in Figur 13h um 180° gedrehte Seitenansicht des Halteelementes gemäß Figur 13a bis 13e,
- Figur 13j: eine Unteransicht des Halteelementes gemäß Figur 13a bis 13e,
- Figur 13k: eine Längsschnittansicht des Halteelementes gemäß Figur 13a bis 13e, geschnitten entlang der Linie D-D aus Figur 13j,
- Figur 13l: eine weitere Längsschnittansicht des Halteelementes gemäß Figur 13a bis 13e, geschnitten entlang der Linie E-E aus Figur 13j,
- Figur 14a: bis
- Figur 14e: perspektivische Ansichten einer erfindungsgemäßen Verriegelungseinrichtung, hier in Form eines u-förmigen radial steckbaren Verriegelungselementes,
- Figur 14f: eine Draufsicht auf das radial steckbare Verriegelungselement gemäß Figur 14a bis 14e,
- Figur 14g: eine Unteransicht des radial steckbaren Verriegelungselementes gemäß Figur 14a bis 14e,
- Figur 14h: eine Längsschnittansicht des radial steckbaren Verriegelungselementes gemäß Figur 14a bis 14e, geschnitten entlang der Linie D-D aus Figur 14g,
- Figur 14i: eine weitere Schnittansicht des radial steckbaren Verriegelungselementes gemäß Figur 14a bis 14e, geschnitten entlang der Linie E-E aus Figur 14g,
- Figur 14j: eine erste Seitenansicht des radial steckbaren Verriegelungselementes gemäß Figur 14a bis 14e,
- Figur 14k: eine gegenüber der in Figur 14j gezeigten Seitenansicht um 90° gedrehte Seitenansicht des radial steckbaren Verriegelungselementes gemäß Figur 14a bis 14e,
- Figur 14l: eine gegenüber der in Figur 14j gezeigten Seitenansicht um 180° gedrehte Seitenansicht des radial steckbaren Verriegelungselementes gemäß Figur 14a bis 14e,
- Figur 15a: eine baukastenartige Anordnung eines erfindungsgemäßen geraden Steckerteils und eines erfindungsgemäßen Winkelsteckerteil mit O-Ring als Dichtring, eines erfindungsgemäßen Halteelementes mit Verriegelungseinrichtung zum Auffügen auf den jeweiligen-Aufnahmeabschnitt des jeweiligen Steckerteils, sowie dreier verschiedener Muffenteile zum Kombinieren mit den Steckerteilen,
- Figur 15b: eine perspektivische Ansicht der baukastenartigen Anordnung der beiden Steckerteile und drei Muffenteile sowie des Halteelementes mit Verriegelungseinrichtung gemäß Figur 15a,
- Figur 15c: eine weitere perspektivische Ansicht der baukastenartigen Anordnung der beiden Steckerteile, drei Muffenteile und des Halteelementes gemäß Figur 15a, wobei das Halteelement mit einer erfindungsgemäßen Verriegelungseinrichtung in Freigabeposition gesteckt versehen ist,
- Figur 15d: eine weitere perspektivische Ansicht der baukastenartigen Anordnung nach Figur 15a, umfassend die beiden Steckerteile und drei Muffenteile sowie das Halteelement, das auch hier wiederum mit der Verriegelungseinrichtung in einer Freigabeposition gesteckt versehen ist,
- Figur 16a: eine perspektivische Ansicht eines erfindungsgemäßen Anschlussverbinders gemäß Figur 1, wobei dieser sich in einer freigegebenen Druckverriegelungsposition befindet,
- Figur 16b: eine Frontansicht des Steckerteils des Anschlussverbinders gemäß Figur 16a,
- Figur 16c: eine Längsschnittansicht durch den Anschlussverbinder gemäß Figur 16a entlang der Linie A-A aus Figur 16b,
- Figur 16d: eine Längsschnittansicht des Anschlussverbinders gemäß Figur 16a, geschnitten entlang der Linie B-B aus Figur 16b, wobei zum Verdeutlichen der freien Position der Druckverriegelung ein Detail im Bereich der Haltearme des Verriegelungselementes vergrößert gezeigt ist,
- Figur 16e: eine Seitenansicht des Anschlussverbinders gemäß Figur 16, wobei zum Verdeutlichen der freien Position der Druckverriegelung ein Detail im Bereich eines Haltearmes des Halteelements vergrößert gezeigt wird.
- Figur 17a: eine weitere perspektivische Ansicht eines erfindungsgemäßen Anschlussverbinders in der Ausgestaltung nach Figur 1,
- Figur 17b: eine Frontansicht auf den Steckerteil des Anschlussverbinders gemäß Figur 17a,
- Figur 17c: eine erste Längsschnittansicht des Anschlussverbinders gemäß Figur 17a, geschnitten entlang der Linie A-A aus Figur 17b,
- Figur 17d: eine zweite Längsschnittansicht des Anschlussverbinders gemäß Figur 17a, geschnitten entlang der Linie B-B aus Figur 17b, wobei zusätzlich eine vergrößerte Detailansicht im Bereich der geblockten Druckverriegelungseinrichtung gezeigt ist,
- Figur 17e: eine Seitenansicht des Anschlussverbinders gemäß Figur 17a, wobei zusätzlich eine vergrößerte Detailansicht im Bereich der geblockten Druckverriegelungseinrichtung gezeigt ist,
- Figur 18a: eine perspektivische Ansicht einer weiteren Ausführungsform eines erfindungsgemäßen Anschlussverbinders mit einem Sensor anstelle eines zweiten Medienanschlusses,
- Figur 18b: eine Seitenansicht des Anschlussverbinders gemäß Figur 18a.
- Figur 18c: eine gegenüber Figur 18b um 90° gedrehte Seitenansicht des Anschlussverbinders gemäß Figur 18a,
- Figur18d: eine Draufsicht auf den Sensor des Anschlussverbinders gemäß Figur 18a, und
- Figur 19: eine perspektivische Ansicht des Steckerteils des Anschlussverbinders gemäß Figur 1 in einer dieser gegenüber vergrößerten Darstellung.

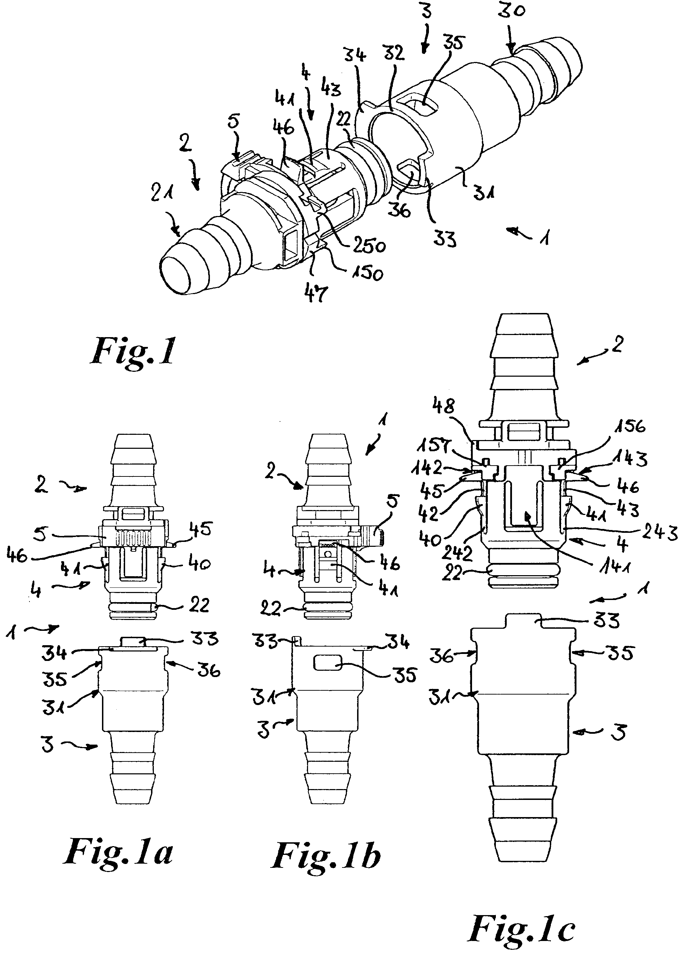

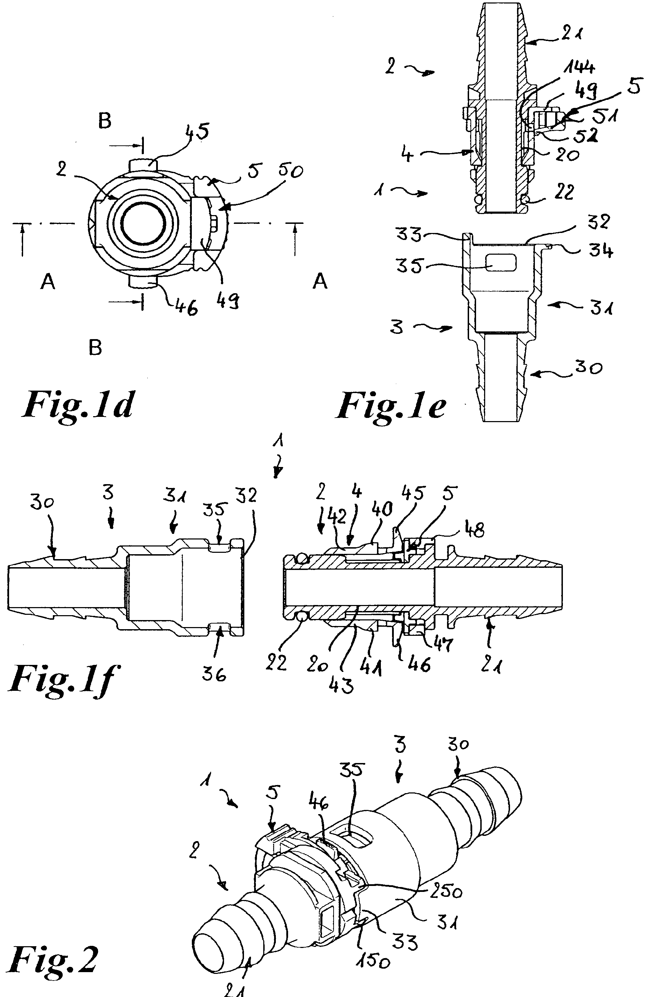

In den Figuren 1 bis 1f ist ein Anschlussverbinder 1 gezeigt, der einen Steckerteil 2, einen Muffenteil 3, ein Halteelement 4, das auf den Steckerteil 2 aufgefügt ist, sowie eine Verriegelungseinrichtung in Form eines radial steckbaren Verriegelungselementes 5 umfasst. Der Anschlussverbinder 1 ist in den Figuren 1 bis 1f im sogenannten Anlieferungszustand, also im Vormontagezustand gezeigt. Hierbei sind Steckerteil 2 und Muffenteil 3 noch nicht ineinander gesteckt, jedoch das Halteelement 4 auf einen Aufnahmeabschnitt 20 des Steckerteils 2 aufgesteckt. Dies ist insbesondere den Figuren 1e und 1f, jedoch auch den Figuren 1 bis 1c besonders gut zu entnehmen. Das radial steckbare Verriegelungselement 5 befindet sich in einer Vormontageposition, in der es auf den Steckerteil 2 radial aufgesteckt ist, sich jedoch in dem Vormontage-Steckzustand befindet, in dem das Halteelement 4 nicht gesperrt wird, sondern freigegeben ist. Außer dem Aufnahmeabschnitt 20 umfasst der Steckerteil 2 einen Dornabschnitt 21, über den eine Verbindung insbesondere mit einer Rohr- oder Schlauchleitung, die in Figur 1 nicht gezeigt ist, hergestellt werden kann. Eine solche Rohr- oder Schlauchleitung wird mit ihrem Ende auf den Dornabschnitt 21 aufgeschoben, also dort aufgedornt. Einen entsprechenden Dornabschnitt 30 weist auch der Muffenteil 3 auf, um auch dort insbesondere eine Rohr- oder Schlauchleitung durch Aufdornen befestigen zu können.

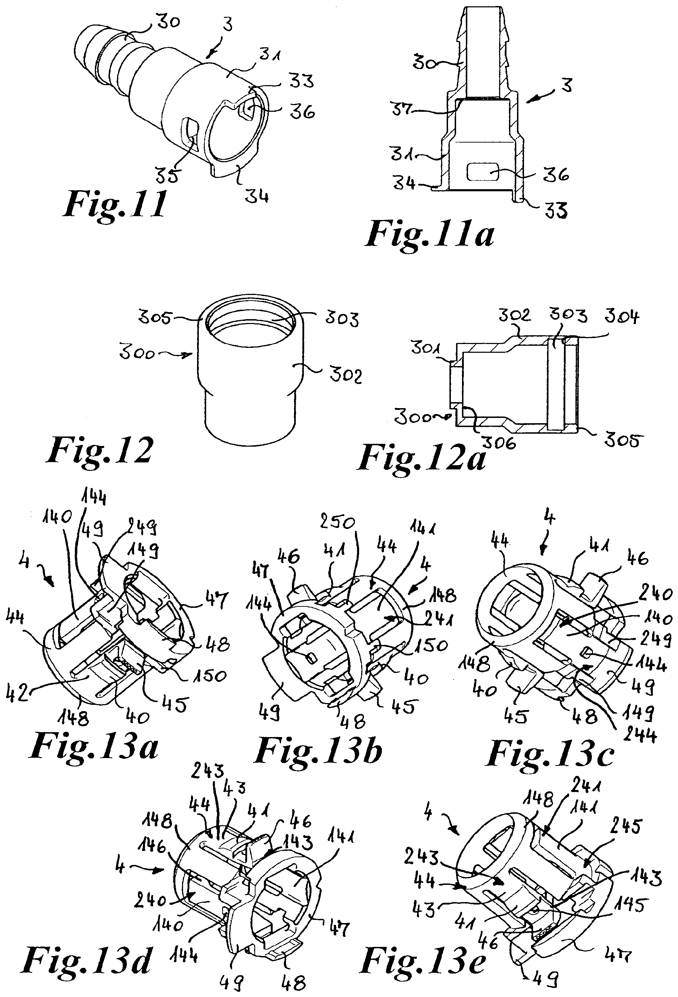

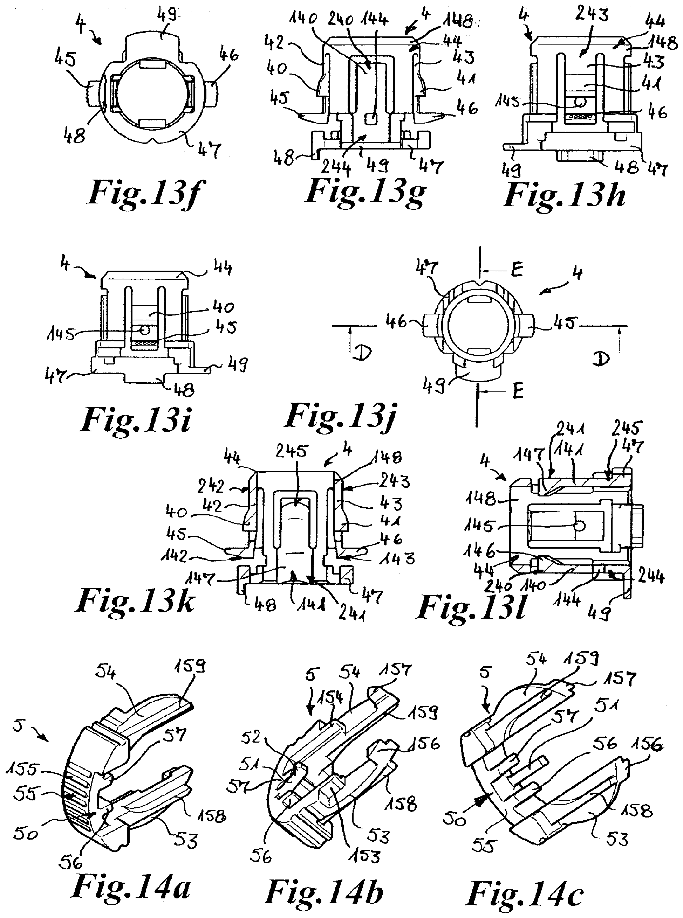

Der Muffenteil 3 weist ferner einen den Steckerteil 2 aufnehmenden Muffenabschnitt 31 auf, der endseitig mit einem in Axialrichtung des Muffenteils 3 angeordneten, über den oberen Rand 32 des Muffenabschnitts 31 des Muffenteils 3 vorkragenden Abschnitt 33 sowie einem radial vom oberen Rand 32 des Muffenabschnitts 31 etwa gegenüberliegend zu dem axial vorkragenden Abschnitt 33 abstehenden Abschnitt 34 versehen ist. Etwa 90° versetzt zu den beiden Abschnitten 33, 34 weist der Muffenabschnitt 31 des Muffenteils 3 zwei einander gegenüberliegende Fensteröffnungen 35, 36 auf, die als Verrastungsöffnungen für Rastnasen 40, 41 an dem Halteelement 4 dienen. Die Rastnasen 40, 41 sind nach außen weisend auf Haltearmen 42, 43 des Halteelementes 4 angeordnet, wie dies nicht nur den Figuren 1, 1a, 1b, 1c sowie 1f entnommen werden kann, sondern besonders gut auch den Figuren 13a bis 13l, in denen das Halteelement 4 im Detail gezeigt ist. Das Halteelement 4 bzw. der Halteelementkörper 44 weist an seinen beiden einander gegenüberliegenden Enden einen endseitigen durchgehenden umlaufenden Rand auf, nämlich an dem einen Ende einen durchgehenden Rand 148 und an dem gegenüberliegenden anderen Ende des Halteelements 4 bzw. Halteelementkörpers 44 einen wulstartig vorstehenden endseitigen Rand 47. Die Haltearme 42, 43 und 140, 141 sind abwechselnd an dem einen Rand 148 und an dem anderen Rand 47 festgelegt, also der Haltearm 42 an dem Rand 148, der Haltearm 140 an dem Rand 47, der Haltearm 43 an dem Rand 148 und der Haltearm 141 an dem Rand 47. Die Haltearme 42, 43 weisen außer dem jeweiligen an dem Rand 148 bzw. an dem Halteelementkörper 44 festliegenden Ende 242, 243 jeweils ein dem gegenüberliegendes freies und in Radialrichtung (bezüglich des Halteelements 4 bzw. Halteelementkörpers 44) federelastisch bewegbares Ende 142, 143 auf. Die Rastnasen 40, 41 sind an den beiden Haltearmen 42, 43 nicht endseitig, sondern entlang von deren Längserstreckung angeordnet, insbesondere etwa im mittleren Bereich zwischen dem freien Ende 142 bzw. 143 und dem festliegenden Ende 242, 243 der Haltearme 42, 43. Die Haltearme 140, 141 weisen ebenfalls außer dem jeweiligen an dem Rand 148 festliegenden Ende 244, 245 jeweils ein dem gegenüberliegendes freies und in Radialrichtung (bezüglich des Halteelements 4 bzw. Halteelementkörpers 44) federelastisch bewegbares Ende 240, 241 auf.

Endseitig an den freien Enden 142, 143 der Haltearme 42, 43 ragt etwa radial nach außen, also weg von dem Halteelementkörper 44 des Halteelements 4, jeweils ein Betätigungselement 45, 46. Durch Aufbringen eines radial nach innen bezüglich des Halteelementes 4 gerichteten Kraft können die Rastnasen 40, 41 aus einer Verrastungsposition in eine nicht verrastete Position verbracht werden, um den Steckerteil mit darauf aufgebrachtem Halteelement aus dem Muffenteil zu lösen, also die Rastnasen 40, 41 aus den Verrastungsöffnungen bzw. Fensteröffnungen 35, 36 heraus zu bewegen und ein axiales Abziehen des Steckerteils 2 vom Muffenteil 3 bzw. umgekehrt des Muffenteils 3 vom Steckerteil 2 zu ermöglichen.

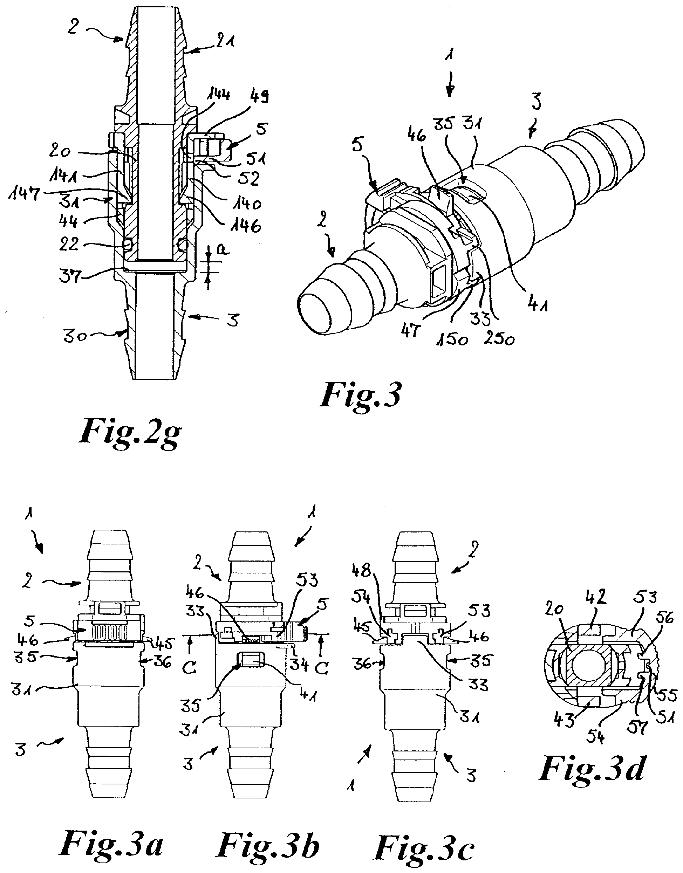

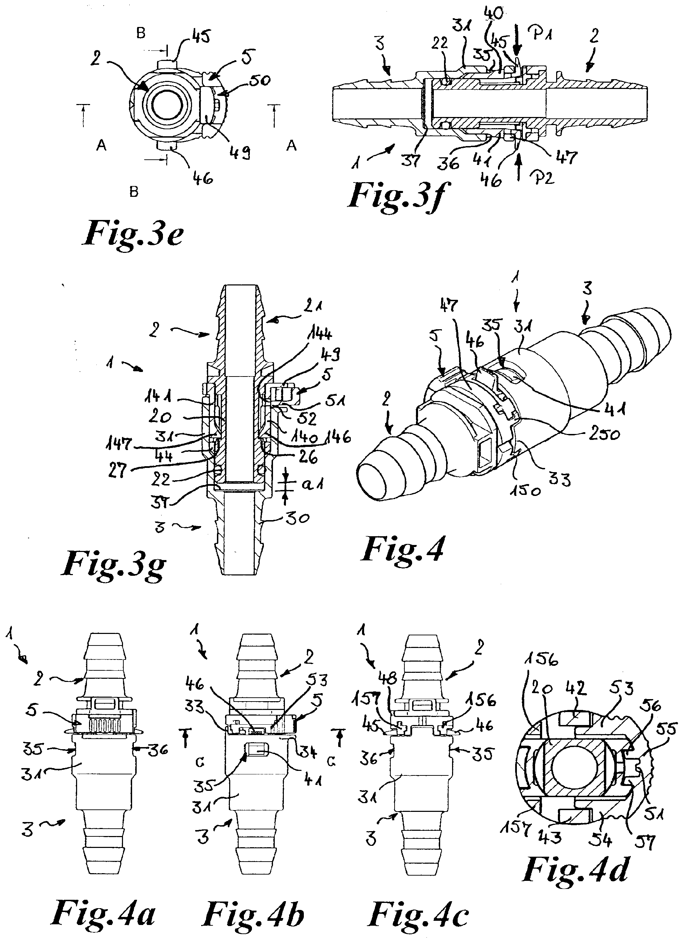

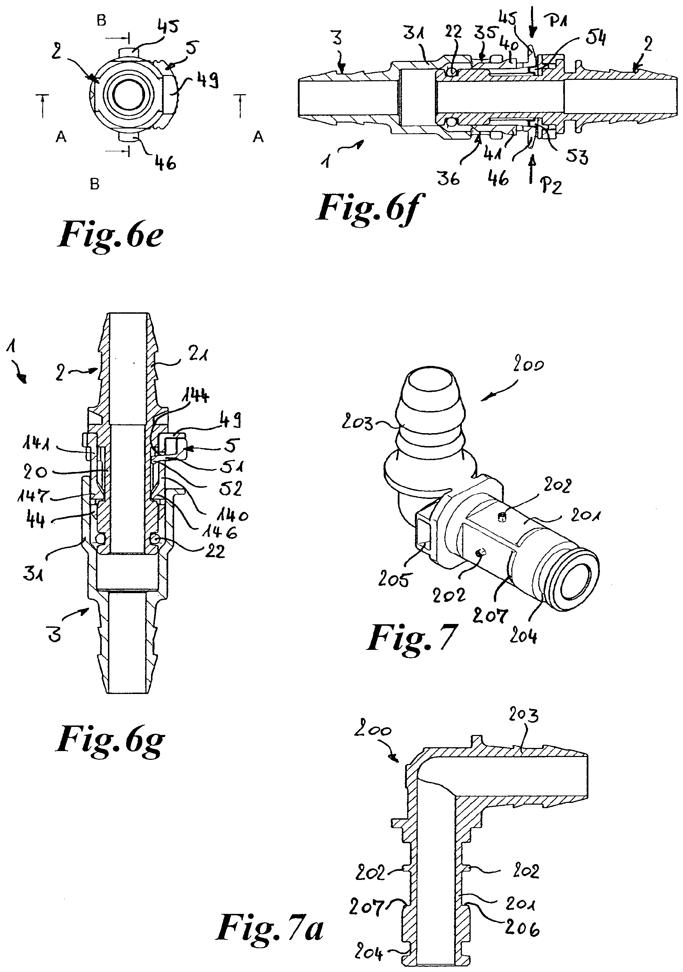

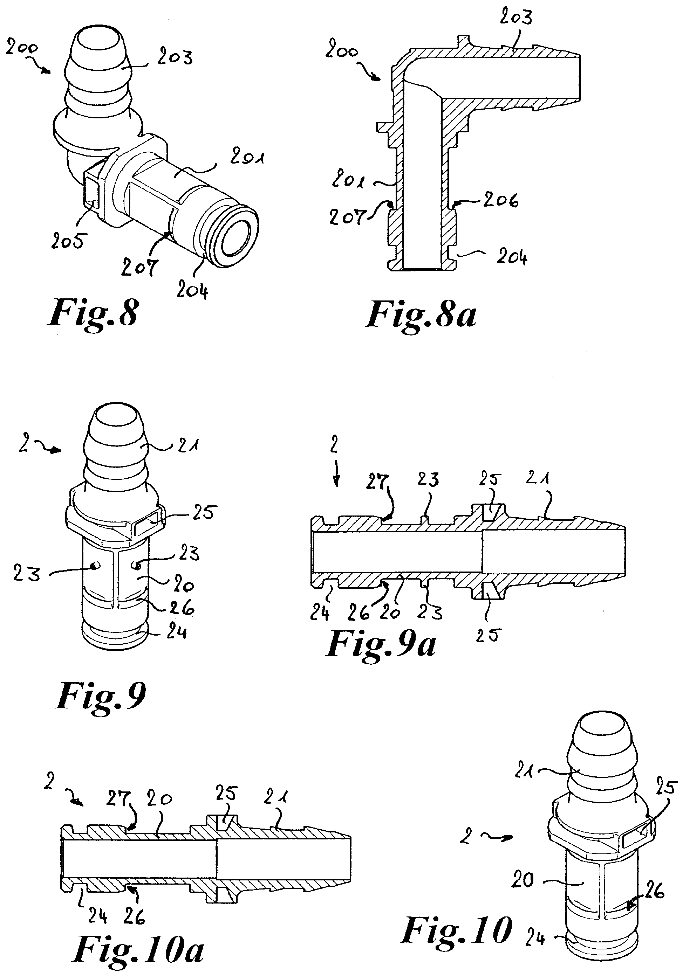

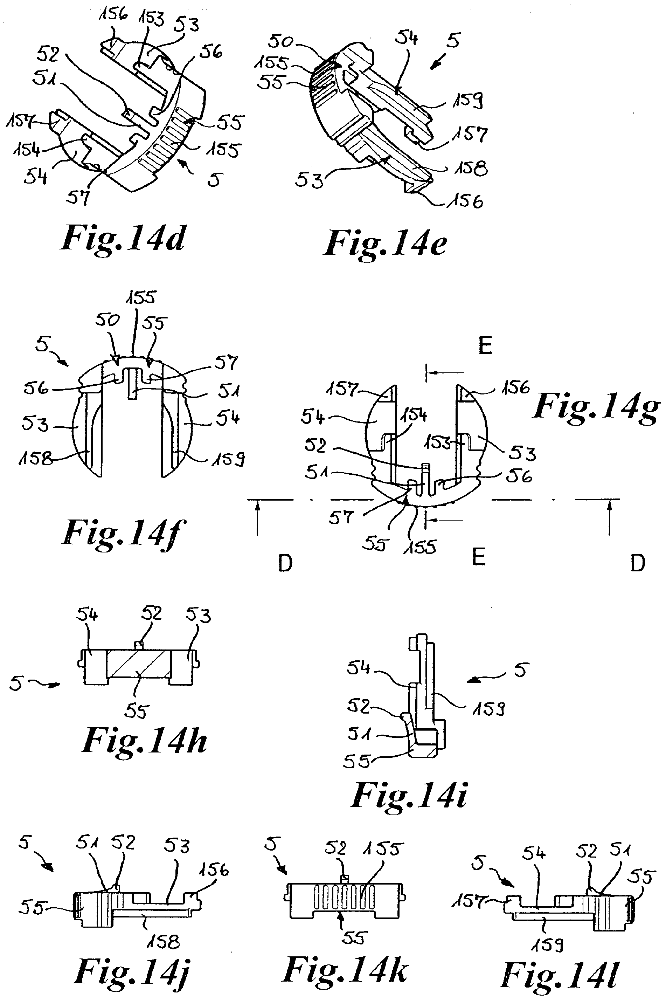

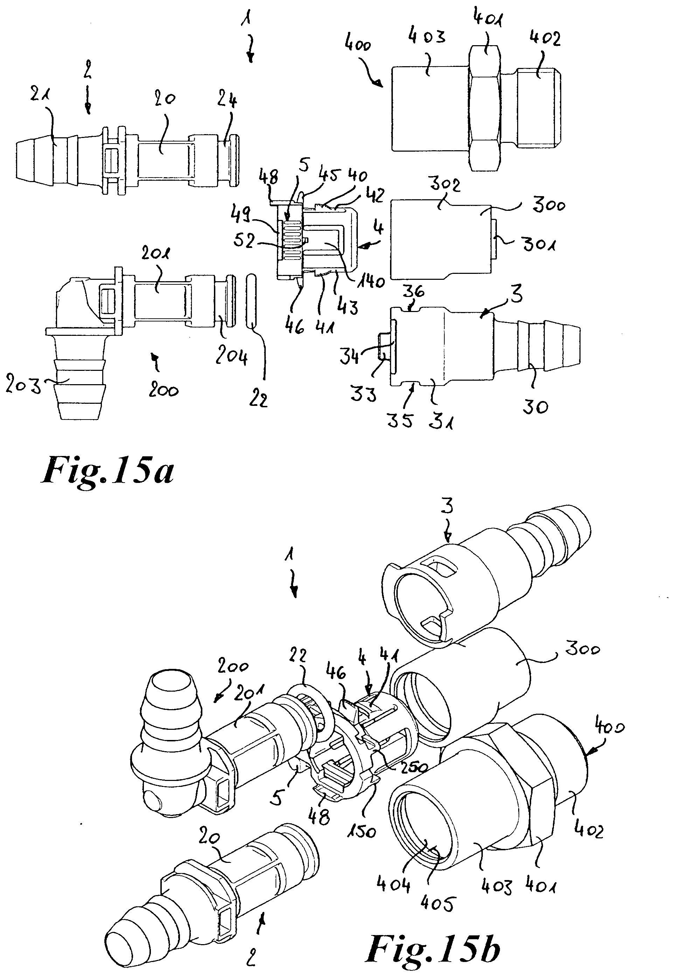

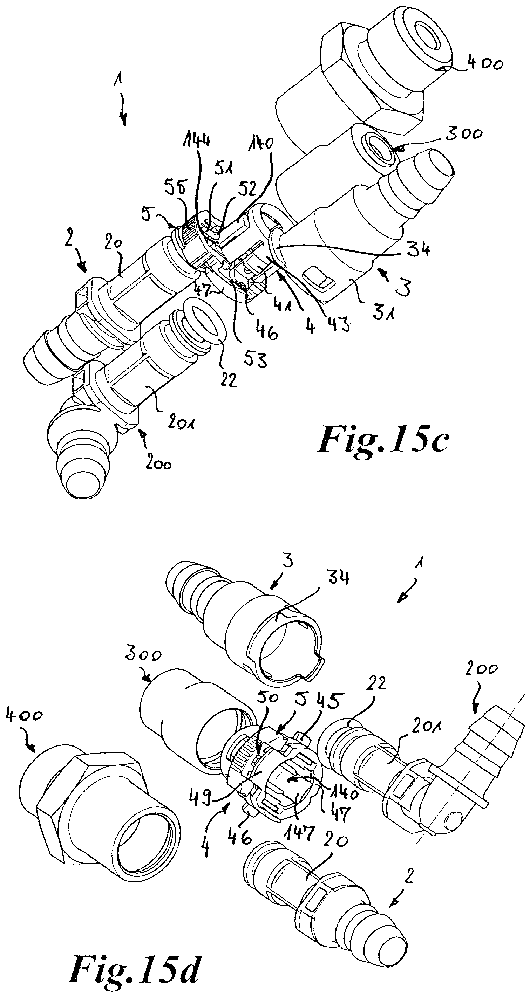

Wie insbesondere den Figuren 13a bis 13l weiter entnommen werden kann, weist das Halteelement 4 benachbart zu dem jeweiligen Betätigungselement 45, 46, jedoch mit Abstand zu diesem den wulstartig vorstehenden endseitigen Rand 47 auf. Am gegenüberliegenden Ende weist das Halteelement 4 den durchgehenden Rand 148 auf. Im Bereich des Betätigungselementes 45 ragt in Axialrichtung des Halteelementes 4 von dem wulstartig vorstehenden endseitigen Rand 47 ein Abschnitt 48 vor. Etwa 90° versetzt zu diesem, also zwischen den beiden Betätigungselementen 45, 46 bzw. den entsprechenden Haltearmen 42, 43, also an der Anordnungsstelle des Haltearms 140, benachbart zu dessen festliegenden Ende 244, ragt von dem wulstartig vorstehenden endseitigen Rand 47 radial nach außen ein Radialabschnitt 49 vor. Dieser dient dem Ineinandergreifen mit dem radial steckbaren Verriegelungselement 5, das eine entsprechende Nut bzw. Aussparung 50 (siehe Figur 15d) aufweist, in die der Radialabschnitt 49 eingreift (s. insbesondere Figur 1d sowie die Figuren 14a und 14c). Benachbart zu dem Radialabschnitt 49 sind an dem Halteelementkörper 44 zwei axiale Stege 149, 249 angeordnet. Auf der dem Radialabschnitt 49 gegenüberliegenden Seite des Halteelementkörpers 44 ragen axial von dem wulstartig vorstehenden endseitigen Rand 47 zwei entsprechende axiale Stege 150, 250 vor, wie insbesondere Figur 1 sowie den Figuren 13a und 13b besonders gut entnommen werden kann. Der Abstand der beiden axialen Stege 150, 250 zueinander ist insbesondere so bemessen, dass der axial vorkragende Abschnitt 33 am oberen Rand 32 des Muffenabschnitts 31 des Muffenteils 3 in diesen eingreifen kann, um eine Positionierhilfe und auch Verdrehsicherung für den Muffenteil 3 gegenüber dem mit dem Halteelement 4 versehenen Steckerteil 2 vorzusehen. Im Bereich der jeweiligen axialen Stege 149, 249 bzw. 150, 250 ist der Halteelementkörper 44 zungenförmig ausgebildet und erstreckt sich als mit dem bereits erwähnten freien Ende 240 bzw. 241 versehener Haltearm 140 bzw. 141 in Längsrichtung bzw. Axialrichtung des Halteelementkörpers 44. Über den Umfang des Halteelements 4 verteilt sind abwechselnd die beiden Haltearme 140, 141 und beiden Haltearme 42, 43 mit ihren nach außen weisenden Rastnasen 40, 41 angeordnet. Auch die beiden Haltearme 140, 141 weisen jeweils eine Rastnase 146, 147 auf, die allerdings nach innen in Richtung des Aufnahmeabschnitts 20 des Steckerteils 2 gerichtet sind (siehe insbesondere Figuren 2g, 5g, 19). Die Rastnasen 146, 147 sind endseitig an den Haltearmen 140, 141 angeordnet, also an den freien Enden 240, 241 der beiden Haltearme 140, 141. Die Haltearme 140, 141 sind endseitig im Bereich ihrer freien Enden 240, 241, im Hinblick auf das Halteelement 4 radial auslenkbar zum Verrasten an einer Rastfläche bzw. einem Rastabsatz bzw. Rastelement des Steckerteils. Mit den Rastnasen 146, 147 halten sie sich an einem entsprechend geformten Absatz oder Element auf der Außenseite des Aufnahmeabschnitts 20 des Steckerteils 2 fest, kommen mit diesem in Eingriff(siehe zum Beispiel Figur 3g). Wie in Figur 3g zu sehen, greifen die Rastnasen 146, 147 der beiden Haltearme 140, 141 in die entsprechenden Nuten oder abgeflachten Abschnitte am Umfang des Aufnahmeabschnitts 20 des Steckerteils 2 ein und stützen sich in diesem und auf dessen Oberfläche ab in Abzugsrichtung des Muffenteils 3 von dem Steckerteil 2 an einem jeweiligen Absatz 26, 27 des Steckerteils 2, der den Aufnahmeabschnitt 20 begrenzt bzw. an einem jeweiligen Absatz 206, 207 des Steckerteils 200 (siehe auch Figuren 7, 7a, 8, 8a). Hierbei bleibt allerdings weiterhin ein gewisses Maß an axialer Bewegbarkeit bzw. Beweglichkeit des Halteelements 4 gegenüber dem Steckerteil 2 bzw. auf dessen Aufnahmeabschnitt 20 bestehen.

Über den Umfang des Halteelements 4 um jeweils 90 ° versetzt zueinander sind abwechselnd somit die beiden Haltearme 140, 141 mit ihren nach innen weisenden Rastnasen 146, 147 zum Festhalten an dem Steckerteil 2 bzw. dessen Aufnahmeabschnitt 20 und die beiden Haltearme 42, 43 mit ihren nach außen weisenden Rastnasen 40, 41 zum Festhalten an dem Muffenteil 3 angeordnet. Dabei sind die einander gegenüberstehenden Haltearme 140, 141 an dem Rand 47 und die beiden einander gegenüberstehenden Haltearme 42, 43 an dem Rand 148 festgelegt. Die freien Enden 240, 241 der beiden Haltearme 140, 141 erstrecken sich bis nahezu an den und enden mit Abstand zu dem Rand 148, angeordnet zwischen den beiden festliegenden Enden 242, 243 der beiden benachbarten Haltearme 42, 43. Die freien Enden 142, 143 der beiden Haltearme 42, 43 erstrecken sich bis nahezu an den und enden mit Abstand zu dem Rand 47, angeordnet zwischen den beiden festliegenden Enden 244, 245 der beiden benachbarten Haltearme 140, 141, wie insbesondere den Figuren 11k und 11l entnommen werden kann.

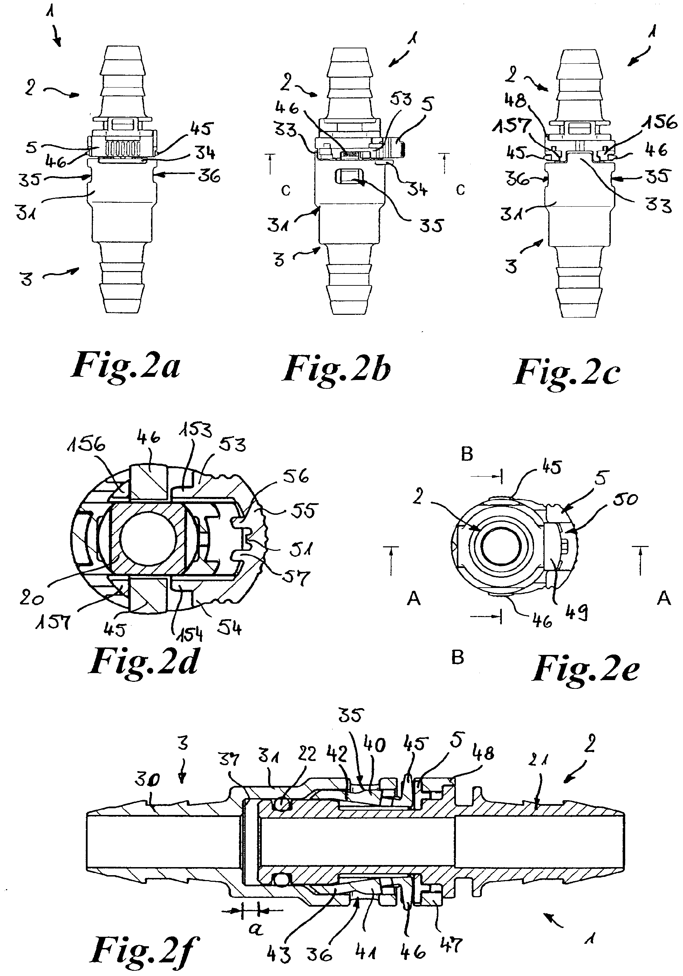

Zumindest der Haltearm 140 weist im Bereich zwischen den beiden axialen Stegen 149, 249 eine Durchgangsöffnung 144 auf, die in Form eines kleinen Fensters ausgebildet ist. In diese Durchgangsöffnung 144 kann das Sperrelement 51 des radial steckbaren Verriegelungselementes 5 eingreifen und sich an dem die Durchgangsöffnung 144 umgrenzenden Rand verrastend festhalten oder sich in der Vormontageposition auf der Außenseite des Haltearms 140 neben der Durchgangsöffnung 144 abstützen. Das Sperrelement 51 weist zu diesem Zweck endseitig eine Rastnase 52 auf. Die Position der Rastnase 52 auflagernd auf der Außenseite des Haltearms 140 neben der Durchgangsöffnung 144 bildet eine Transportsicherung gegen ein ungewolltes Einschieben des radial steckbaren Verriegelungselements 5 in eine vollständig gesteckte Position. In der in die Durchgangsöffnung 144 eingefügten Position kann sich die Rastnase 52 am die Durchgangsöffnung 144 umgrenzenden Rand festhalten und das Sperrelement 51 und somit das radial steckbare Verriegelungselement gegen ein ungewolltes Lösen aus der Verriegelungsposition sichern. Ferner werden in dieser Position die Haltearme 42, 43 des Halteelements 4 gegen ein radiales Bewegen in Richtung des Steckerteils gehindert, da das radial steckbare Verriegelungselement 5 die Haltearme mit Sperrabschnitten 153, 154 hintergreift. Die Sperrabschnitte 153, 154 sind besonders gut den Figuren 14b, 14d und 14g zu entnehmen. Stützt sich die Rastnase 52 auf der Außenseite des Haltearms 140 neben der Durchgangsöffnung 144 ab, hintergreifen auch die Sperrabschnitte 153, 154 des radial steckbaren Verriegelungselements 5 nicht die Haltearme 42, 43 des Halteelements 4 (siehe z.B. Figur 2d). Die Haltearme 42, 43 sind in dieser Vormontageposition des radial steckbaren Verriegelungselements 5 somit radial frei beweglich zum rastenden Ineinandergreifen mit der entsprechenden Verrastungsöffnung 35, 36 des Muffenteils 3.

Das zungenartige Sperrelement 51 mit der endseitig angeordneten Rastnase 52 lässt sich besonders gut den Figuren 14b, 14d, 14f bis 14l entnehmen. Wie insbesondere den Figuren 14b und 14e entnommen werden kann, ist das Sperrelement 51 leicht gekrümmt ausgebildet, um sich ohne Aufbringen einer Druckkraft durch den Muffenteil 3 neben der Durchgangsöffnung 144 auf der Außenseite des Haltearms 140 abzustützen.

Das Sperrelement 51 dient auch der doppelten Abfrage eines vollständigen oder hinreichend vollständigen Bewegens des radial steckbaren Verriegelungselements 5 in seine Verriegelungsposition an dem Halteelement 4. Bei dieser doppelten Abfrage werden die Position des Sperrelements 51 sowie die radiale Bewegbarkeit der mit dem radial steckbaren Verriegelungselement 5 zusammenwirkenden Haltearme 42, 43 abgefragt, wobei es für ein Einschieben des radial steckbaren Verriegelungselements 5 in seine Endposition erforderlich ist, dass der radial abstehende Abschnitt 34 oder der Rand 32 des Muffenteils 3 das Sperrelement 51 bzw. dessen endseitigen nasenförmigen Rastabschnitt 52 vor die Durchgangsöffnung bzw. das Fenster 144 positioniert und ferner die Haltearme 42, 43 komplett ausgelenkt sind und in die Fenster- bzw. Verrastungsöffnungen 35, 36 eingreifen. Hierüber kann somit auf den Steckzustand des radial steckbaren Verriegelungselements 5 geschlossen werden.

Wie den Figuren 14a bis 14l ebenfalls besonders gut entnommen werden kann, ist das radial steckbare Verriegelungselement 5 in der Draufsicht u-förmig ausgebildet und weist zwei einander gegenüberliegende Schenkel 53, 54 und einen zwischen diesen angeordneten Querabschnitt 55 auf. Das zungenartige Sperrelement 51 ist entlang dem Querabschnitt 55, etwa senkrecht von diesem abstehend angeordnet. Es ragt in den zwischen den beiden Schenkeln 53, 54 aufgespannten inneren Bereich des u-förmigen radial steckbaren Verriegelungselementes 5 hinein. Der Querabschnitt 55 kann, wie gezeigt, zum besseren, rutschfesten Angreifen außenseitig mit einer Riffelung 155 versehen sein. Zum Schutz des zungenartigen Sperrelementes 51 und als Abstandselemente sowie zum Abstützen, als Führungselemente und zur Verdrehsicherung sind zwei links und rechts benachbart zu dem Sperrelement 51 angeordnete Nocken 56, 57 vorgesehen, die insbesondere den Figuren 14c, 14d, 14f und 14g besonders gut entnommen werden können. Die beiden dem Sperrelement 51 benachbarten Nocken 56, 57 dienen insbesondere dem Schutz des Sperrelementes 51 gegen ein versehentliches Abknicken oder Abbrechen im nicht vollständig gesteckten Zustand des radial steckbaren Verriegelungselementes 5 auf dem Halteelement 4 und stützen das radial steckbare Verriegelungselement 5 zusätzlich, insbesondere gegen ein Verdrehen, ab.

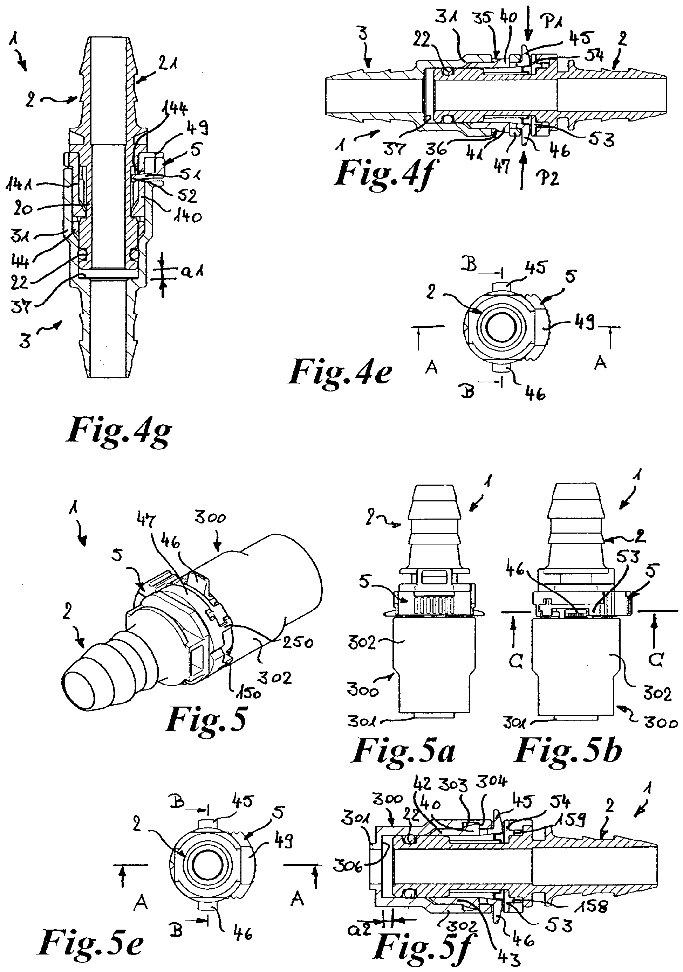

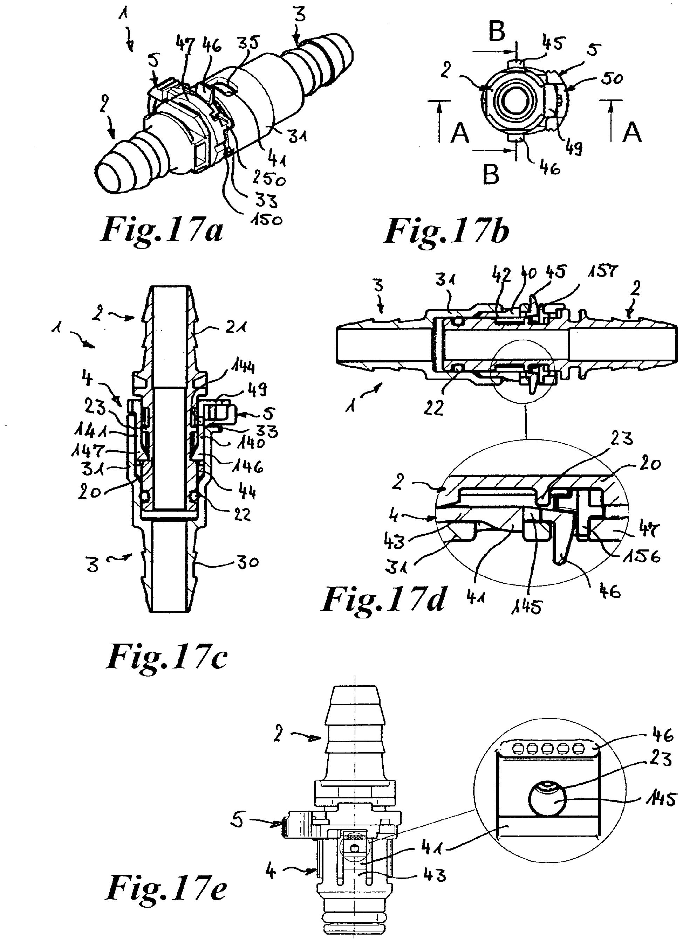

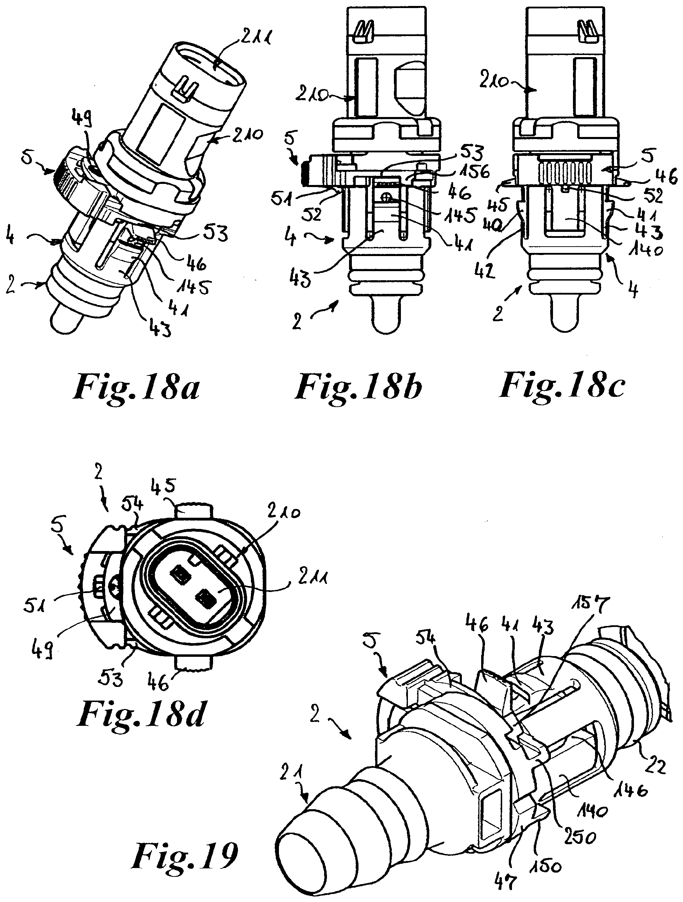

Das radial steckbare Verriegelungselement 5 weist ferner endseitig an den beiden Schenkeln 53, 54 jeweils einen vorkragenden, teilweise gestuft geformten Verliersicherungsabschnitt 156, 157 auf. Dieser greift mit zumindest einem entsprechend gegengleich geformten Abschnitt am Halteelement 4 formschlüssig ineinander, für den vollständig gesteckten Zustand des radial steckbaren Verriegelungselements 5 ist dies insbesondere der Figur 4, 4b und 17e zu entnehmen. Gemäß Figur 4d ist erkennbar, dass in der vollständig gesteckten Position des radial steckbaren Verriegelungselements 5 die Verliersicherungsabschnitte 156, 157 außenseitig so gerundet geformt sind, dass eine gleichmäßige Abschlussfläche außen auf dem Halteelement 4 in diesem gebildet wird. Befindet sich das radial steckbare Verriegelungselement 5 in einer unvollständigen Steckposition, insbesondere in der Vormontageposition, wie sie in den Figuren 1a bis 3g und 19 gezeigt ist, greifen die Verliersicherungsabschnitte 156, 157 formschlüssig mit dem jeweiligen Haltearm 42, 43 im Bereich seines jeweiligen Betätigungselements 45, 46 ineinander. Hierdurch wird ein Entfernen des radial steckbaren Verriegelungselements 5 von dem Halteelement 4 verhindert bzw. erschwert, so dass die Verliersicherungsabschnitte 156, 157 eine Verliersicherung für das radial steckbare Verriegelungselement 5 an dem Halteelement 4 bilden (siehe auch Figur 19).

Die beiden Schenkel 53, 54 des radial steckbaren Verriegelungselements 5 weisen ferner, wie insbesondere den Figuren 14a bis 14c, 14e, 14f sowie 14i, 14j und 14l entnommen werden kann, jeweils einen vorkragenden Führungssteg 158, 159 auf. Dieser dient dem geradlinigen Führen des radial steckbaren Verriegelungselements 5 während des Bewegens desselben beim radialen Steckvorgang. Die vorkragenden Führungsstege 158, 159 greifen dementsprechend mit entsprechend gegengleich geformten Flächen oder Absätzen des Halteelements 4 formschlüssig ineinander, wie insbesondere auch der vergrößerten Ansicht des Anschlussverbinders 1 in Figur 19 zu entnehmen ist.

In Figur 1 ist das radial steckbare Verriegelungselement 5 lediglich in einer Vormontageposition am Halteelement 4 angeordnet, wobei es mit seinen beiden Schenkeln 53, 54 zwischen die Betätigungselemente 45, 46 und den wulstartig vorstehenden endseitigen Rand 47 eingreift. Sowohl der Halteelementkörper 44 im Bereich seines wulstartig vorstehenden endseitig Randes 47 als auch die beiden Schenkel 53, 54 des radial steckbaren Verriegelungselementes 5 weisen vorkragende und zurückspringende Abschnitte auf, die beim Halteelement 4 und dem radial steckbaren Verriegelungselement 5 entsprechend gegengleich ausgebildet sind und dementsprechend ineinandergreifen können. Dies ist besonders den Figuren 2d, 3d und 14d zu entnehmen. In der Vormontageposition des radial steckbaren Verriegelungselementes 5 am Halteelement 4 werden die Haltearme 42, 43 des Halteelementes noch nicht blockiert. Dies ist insbesondere den Figuren 1 und 1f zu entnehmen. Die Vormontageposition des radial steckbaren Verriegelungselementes 5 am Halteelement 4 ist somit eine Freigabeposition bezüglich der Beweglichkeit der Haltearme 40, 43 des Halteelementes 4.

Auf den so mit Halteelement 4 und steckbarem Verriegelungselement 5 vormontierten Steckerteil 2 wird, wie in den Figuren 2 bis 2g gezeigt, der Muffenteil 3 aufgeschoben. Hierbei bleibt das radial steckbare Verriegelungselement 5 in der Vormontageposition, in der durch das radial steckbare Verriegelungselement 5 somit die Haltearme 42, 43 frei in Radialrichtung des Steckerteils 2 federnd bewegbar bleiben. Dementsprechend werden die beiden einander gegenüberliegenden Haltearme 42, 43 beim Aufschieben des Muffenteils 3 mit seinem Muffenabschnitt 31 auf den auf seinem Aufnahmeabschnitt 20 mit dem Halteelement 4 versehenen Steckerteil 2 radial in Richtung des Aufnahmeabschnitts 20 des Steckerteils 2 gedrückt. Dies ist insbesondere der Figur 2f zu entnehmen. Der Muffenabschnitt 31 drückt beim Überqueren der Rastnasen 40, 41 die Haltearme 42, 43, an denen die Rastnasen 40, 41 angeordnet sind, radial in Richtung des Aufnahmeabschnitts 20 des Steckerteils 2. Hierbei tauchen auch die Betätigungselemente 45, 46 radial in Richtung des Steckerteils ein bzw. weichen zurück, so dass sie weniger weit über die äußere Erstreckung des Halteelementkörpers 44 vorstehen als in der Vormontageposition, die in Figur 1 gezeigt ist. Dies kann insbesondere dem Vergleich der Figuren 2 und 1 entnommen werden. Somit ist optisch und gegebenenfalls auch haptisch beim Darüberstreichen erkennbar, dass ein unvollständiger Steckvorgang von Steckerteil 2 und Muffenteil 3 hier vorliegt. Durch das unvollständig eingeschobene radial steckbare Verriegelungselement 5 wird eine ungeprüfte Steckposition angezeigt. Das radial steckbare Verriegelungselement 5 steht über den äußeren Umfang des Halteelements 4 hinaus. Würde unter Druck stehendes Medium durch den Anschlussverbinder 1 in dieser Position hindurch gesandt, würden sich auf Kurz oder Lang Steckerteil und Muffenteil voneinander lösen. Für eine sichere Verwendung des Anschlussverbinders 1 muss jedoch eine vollständige Steckverbindung von Steckerteil und Muffenteil vorliegen, die über das radial steckbare Verriegelungselements kontrolliert werden kann, wie vorstehend beschrieben.

In der in Figur 2 bis 2g gezeigten noch nicht vollständigen Steckposition von Steckerteil 2 und Muffenteil 3 liegt ein Dichtring bzw. O-Ring 22, der auf einem endseitigen Abschnitt des Steckerteils 2 in einer umlaufenden Nut dort, der als erstes und dementsprechend tief in den Muffenabschnitt 31 des Muffenteils 3 eingesteckt wird, dichtend an der Innenfläche des Muffenabschnitts 31 in diesem Bereich an, wie insbesondere besonders gut Figur 2f und 2g entnommen werden kann. Dort ist insbesondere auch erkennbar, dass der Steckerteil 2 noch nicht vollständig in den Muffenteil 3 eingesteckt ist, da die Rastnasen 40, 41 noch nicht in den Verrastungsöffnungen 35, 36 des Muffenabschnitts 31 des Muffenteils 3 einrasten können.

Die vollständig gesteckte Endposition von Steckerteil 2 und Muffenteil 3 ist in den Figuren 3 bis 3g gezeigt. Optisch und haptisch ist dies insbesondere bereits durch die wieder weit über die Oberfläche des Halteelementes 4 radial vorstehenden Betätigungselemente 45, 46 von diesem erkennbar. Wie insbesondere in den Figuren 3 und 3f erkennbar, liegen die Rastnasen 40, 41 in verrasteter Position in den beiden Verrastungsöffnungen 35, 36 im Muffenabschnitt 31 des Muffenteils 3. Die Rastnasen 40, 41 stützen sich in den Verrastungsöffnungen 35, 36 ab und verriegeln somit die eingenommene Verrastungsposition von Steckerteil mit darauf aufgefügtem Halteelement 4 und Muffenteil 3. Da der Muffenabschnitt 31 nicht mehr radial gegen die Rastnasen 40, 41 und somit die Haltearme 42, 43 drückt, können diese in die Ausgangsposition oder Vormontageposition, wie sie auch in den Figuren 1 bis 1f gezeigt ist, zurückfedern, so dass die Betätigungselemente 45, 46 radial wieder weit nach außen über die Oberfläche des benachbart zu den Betätigungselementen 45, 46 angeordneten Halteelementkörpers 44 hinausragen. Dies ist insbesondere den Figuren 3 und 3f zu entnehmen. Ein Lösen der Rastverbindung der Rastnasen 40, 41 in den Verrastungsöffnungen 35, 36 des Muffenabschnitts 31 des Muffenteils 3 kann durch Ausüben einer Druckkraft radial in Richtung des Steckerteils 2, wie durch die Pfeile P1 und P2 angedeutet, erfolgen. Nach dem Einfädeln und Verrasten der Rastnasen 40, 41 in den Verrastungsöffnungen 35, 36 des Muffenteils 3 ist das Halteelement 4, das auf den Steckerteil 2 aufgesteckt ist, verliersicher auf diesem gehalten und die Steckposition von Steckerteil 2 mit Halteelement 4 und Muffenteil 3 gesichert bzw. gesperrt.

Wie insbesondere Figur 3d entnommen werden kann, befindet sich das radial steckbare Verriegelungselement 5 weiterhin in der Vormontageposition, ist also nicht weiter in den Zwischenraum zwischen den Betätigungselementen 45, 46 und dem wulstartig vorstehenden endseitigen Rand 47 des Halteelementes 4 eingeschoben. Die durch das radial steckbare Verriegelungselement 5 ausübbare zusätzliche Sperre oder Verriegelung der Steckverbindung von Muffenteil und Steckerteil mit darauf aufgefügtem Halteelement 4 ist in dem Steckzustand nach Figur 3 bis 3g somit noch nicht wirksam. Das radial steckbare Verriegelungselement 5 als Verriegelungseinrichtung ist erst in dem Steckzustand nach Figur 4 bis 4g wirksam. Wie insbesondere der Querschnittsansicht entlang der Linie C-C aus Figur 4b in Figur 4d entnommen werden kann, hintergreifen die beiden Schenkel 53, 54 des radial steckbaren Verriegelungselementes 5 mit ihrem jeweiligen Sperrabschnitt 153, 154 die beiden Haltearme 42, 43 des Halteelementes 4. Ferner greift das zungenartige Sperrelement 51 mit seiner Rastnase 52 in die Durchgangsöffnung 144 in dem Haltearm140 des Halteelementes 4 ein und die beiden das Sperrelement 51 flankierenden Nocken 56, 57 stützen sich auf der Oberfläche des Haltearms 140 ab. Die Rastnase 52 des Sperrelementes 51 kann sich insbesondere auf der Außenseite des Aufnahmeabschnitts 20 des Steckerteils 2 abstützen, wie bereits beschrieben und wie dies insbesondere Figur 4g entnommen werden kann. Da das radial steckbare Verriegelungselement 5 in seiner gesteckten Endposition dicht, eng oder formschlüssig an der Außenseite des Steckerteils 2 anliegt, kann nicht nur optisch, sondern auch haptisch die Endposition des Steckvorgangs des radial steckbaren Verriegelungselementes 5 festgestellt bzw. kontrolliert werden. Wie insbesondere den Figuren 4 und 4e sowie 4f entnommen werden kann, ragen die Betätigungselemente 45, 46 weiterhin über die Oberfläche des Halteelementes 4, insbesondere des wulstartig vorstehenden endseitigen Randes 47 von diesem, hinweg, wobei ein Lösen der Steckverbindung von Steckerteil und Muffenteil durch Ausüben eines Drucks in Richtung der Pfeile P1 und P2 in dem Steckzustand nach Figur 4 bis 4g nicht möglich ist, da dies durch das in seine Endposition verbrachte radial steckbare Verriegelungselement 5 verhindert wird.

Wie insbesondere den Figuren 3g und 4g entnommen werden kann, ebenso wie den Figuren 3f und 4f, kann zwischen der Frontseite des Steckerteils 2, also dem Abschnitt des Steckerteils, der über den O-Ring 22 gegenüber der Innenseite des Muffenabschnitts 31 abgedichtet ist, und dem Absatz 37 im Muffenabschnitt 31 weiterhin ein Abstand verbleiben, der in den Figuren 3g und 4g mit a1 gezeigt ist. In den Figur 2g und 2f ist hingegen mit a der Abstand der Frontseite des Steckerteils 2 von der Innenseite des Muffenabschnitts 31 bezeichnet, der sich aufgrund der nicht verrasteten, also nur unvollständig gesteckten, Position von Steckerteil und Muffenteil ergibt .

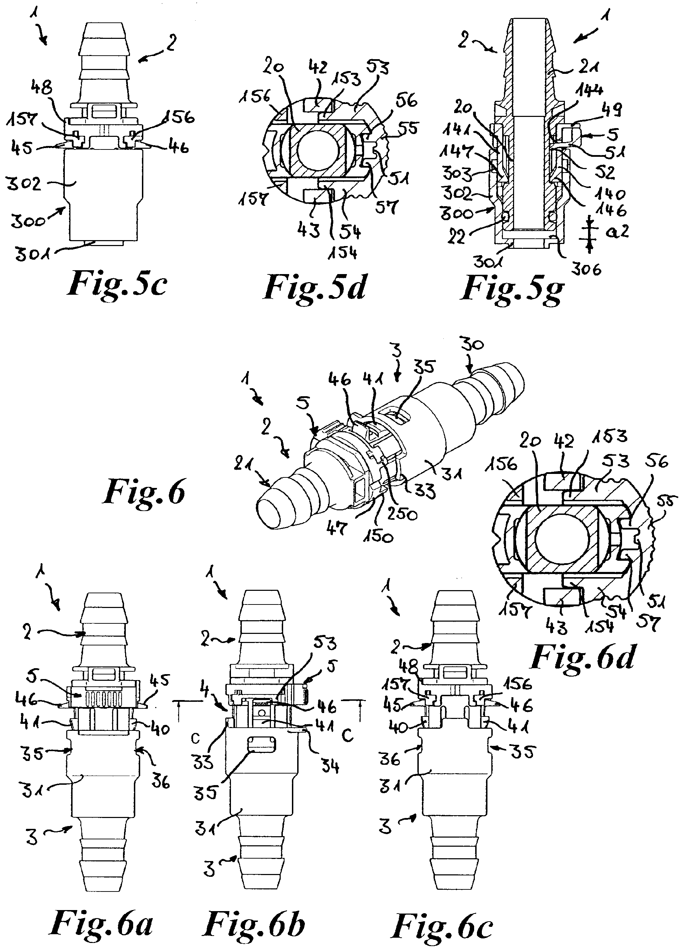

Die Figuren 5 bis 5g zeigen ebenfalls den Anschlussverbinder 1 einerseits mit Endposition der Verrastung von Muffenteil 3 und Steckerteil 2 mit darauf aufgefügtem Halteelement 4, andererseits mit der Endposition des radial steckbaren Verriegelungselementes 5, das den Verrastungszustand von Muffenteil 3 und mit Halteelement 4 versehenem Steckerteil 2 sichert. Im Unterschied zu der Ausführungsform nach den Figuren 1 bis 4g ist der Muffenteil 300 nach Figur 5 bis 5g als Zerspanungsteil, insbesondere hergestellt aus Metall, ausgebildet und weist endseitig keinen Dornabschnitt auf. Anstelle dessen ist der Muffenteil 300 mit einem kleinen Befestigungsstutzen 301 beispielsweise zum Verbinden mit einer Rohrleitung versehen. Über den Befestigungsstutzen 301 ist somit eine Verbindung zu einer Rohrleitung oder auch einem Aggregat möglich. Im Schnitt ist der Befestigungsstutzen 301 besonders gut den Figuren 5f und 5g zu entnehmen. Zum Verbinden mit einer Rohrleitung, einem Aggregat, einer Maschine etc. können unterschiedliche Ausgestaltungen von Anschlüssen des Anschlussverbinders 1 vorgesehen sein, wie eine Ausgestaltung als Muffenteil oder -abschnitt, Dornabschnitt, Gewindeabschnitt etc. Auch zwei Kupplungsteile können an den beiden Seiten/Enden des Anschlussverbinders vorgesehen sein bzw. des Muffenteils und/oder des Steckerteils oder eines Anschlusses in oder an einer Maschine, mit der der Anschlussverbinder verbunden werden soll.

Der Muffenteil 300 weist ebenso wie der Muffenteil 3 einen Muffenabschnitt 302 auf, der jedoch anstelle der Verrastungsöffnungen 35, 36 des Muffenabschnitts 31 des Muffenteils 3 eine inwandige Verrastungsnut 303 mit Verrastungsfläche 304 aufweist. Dies ist ebenfalls besonders gut den Figuren 5f und 5g zu entnehmen. In die Verrastungsnut 303 greifen die Rastnasen 40, 41 an den Haltearmen 42, 43 des Halteelementes 4, das wiederum auf dem Steckerteil 2 angeordnet ist, rastend ein, wobei sie sich an der Verrastungsfläche 304 abstützen. Dementsprechend ragen auch wiederum die beiden Betätigungselemente 45, 46 über die Oberfläche des Muffenabschnitts 302 bzw. des wulstartig vorstehenden endseitigen Randes 47 des Halteelementes 4 auf dem Steckerteil 2 hinaus, wie den Figuren 5c, 5e und 5f besonders gut entnommen werden kann, ebenso in der perspektivischen Ansicht des Anschlussverbinders 1 in Figur 5. Wie in Figur 5d gezeigt, hintergreifen wiederum die beiden Schenkel 53, 54 des radial steckbaren Verriegelungselementes 5 die beiden Haltearme 42, 43 mit ihren Sperrabschnitten 153, 154 und sichern somit zusätzlich die Endposition der Steckverbindung von Muffenteil 300 und Steckerteil 2 mit darauf aufgefügtem Halteelement 4. Der Muffenteil 300 kann beispielsweise aus zumindest einem Metall, wie insbesondere Aluminium, Messing, Stahl oder einer Legierung, wie einer Aluminiumlegierung, bestehen. Demgegenüber kann der Muffenteil 3, der mit dem Dornabschnitt 30 versehen ist, beispielweise aus einem Kunststoffmaterial bestehen. Ebenfalls kann der Muffenteil, in beiden Ausgestaltungen, aus zumindest einem Kunststoffmaterial und/oder aus zumindest einem Metall bestehen. Der Steckerteil 2 kann sowohl aus Kunststoffmaterial als auch aus einem Metall, wie Aluminium oder einer Aluminiumlegierung, bestehen. Die jeweilige Materialwahl von Steckerteil und Muffenteil kann von dem jeweiligen Anwendungsfall abhängig gemacht werden, also insbesondere Steckerteil und Muffenteil aus demselben Material oder aus unterschiedlichen Materialien, insbesondere Kunststoff und/oder Metall, bestehen. Auch das Halteelement kann aus einem oder mehreren Kunststoffmaterial(ien) und/oder einem oder mehreren Metall(en) bestehen.

In der verrasteten Endposition von Steckerteil 2 mit darauf aufgefügtem Halteelement 4 und Muffenteil 300 verbleibt, zumindest in der gezeigten Ausführungsform, ein Abstand a2 zwischen der Frontseite des Steckerteils 2, wobei wiederum der O-Ring 22 auf dem Steckerteil zum Abdichten des Steckerteils gegenüber der Innenfläche des Muffenabschnitts 302 dient, und einem Absatz 306 im Muffenteil 300, wie Figur 5g ebenso Figur 5f und Figur 12a entnommen werden kann.

Die Figuren 6 bis 6g zeigen den Anschlussverbinder 1 mit noch nicht auf den Steckerteil 2 aufgestecktem Muffenteil 3, wobei jedoch das radial steckbare Verriegelungselement 5 bereits in seine Endposition, also vollständig gesteckte Position, in das Halteelement 4 eingesteckt ist. Dementsprechend werden die Haltearme 42, 43 daran gehindert, ein im Wesentlichert radiales Einfedern in Richtung des Steckerteil 2 zu ermöglichen. Es ist somit kein Betätigen der Betätigungselemente 45, 46 möglich, da diese durch die Schenkel 53, 54 des radial steckbaren Verriegelungselementes 5 an einer Bewegung gehindert werden, hierdurch geblockt sind. Dies lässt sich insbesondere der Querschnittsansicht in Figur 6d entnehmen. Ein Aufschieben und Verrasten des Muffenteils 3 mit seinem Muffenabschnitt 31 auf den Steckerteil 2 mit darauf aufgefügtem Halteelement 4 ist dementsprechend nicht möglich, da die Rastnasen 40, 41 nicht radial nach innen in Richtung des Steckerteils 2 bewegt werden, somit wegtauchen, können, um im Innern des Muffenabschnitts 31 so weit zu gleiten, bis sie mit den Verrastungsöffnungen 35, 36 im Muffenabschnitt 31 des Muffenteils 3 fluchten und in diese verrastend eingreifen können. Eine Rastverbindung von Steckerteil mit Halteelement und Muffenteil ist somit bei eingestecktem, also in Endposition gebrachtem radial steckbaren Verriegelungselement 5 nicht möglich. Der vollständig eingesteckte Zustand, also die Endposition des radial steckbaren Verriegelungselementes 5 an dem Steckerteil 2 bzw. Halteelement 4, kann sowohl optisch als auch haptisch ohne weiteres festgestellt werden, somit für das radial steckbare Verriegelungselement 5 die Fehlmontage, die ein Verrasten von Steckerteil und Muffenteil verhindert. Um wiederum ein Zusammenstecken und Verrasten von Muffenteil und Steckerteil mit darauf aufgefügtem Verriegelungselement zu ermöglichen, muss das radial steckbare Verriegelungselement 5 aus seiner Endposition wiederum gelöst und beispielsweise in die in den Figuren 1 bis 1g und 19 gezeigte Position verbracht werden.

In den vorstehend beschriebenen Figuren sind jeweils gerade Steckerteile und gerade Muffenteile gezeigt. Demgegenüber zeigen die Figuren 7, 7a und 8, 8a Winkel-Steckerteile 200. In den Figuren 9, 9a sowie 10, 10a sind jeweils noch einmal gerade Steckerteile 2 gezeigt. Bei allen Steckerteilen 2 und 200 ist jeweils der Aufnahmeabschnitt 20 bzw. 201 mehrkantig ausgebildet, um eine Verdrehsicherung für das dort aufgefügte Halteelement 4 vorzusehen. Ebenso ist es jedoch auch möglich, den Steckerteil 2 bzw. 200 mit einem runden Querschnitt im Bereich seines Aufnahmeabschnitts 20 bzw. 201 auszubilden. Insbesondere dann, wenn das Vorsehen einer Verdrehsicherung dort nicht erforderlich ist oder wenn eine andere Art einer.Verdrehsicherung vorgesehen ist, kann der Steckerteil durchgängig im Querschnitt rund ausgebildet werden. Auch Mischformen eines runden Querschnitts und von abgeflachten Abschnitten oder zumindest eines abgeflachten Abschnitts sind entlang der Umfangsfläche insbesondere des Aufnahmeabschnitts 20 bzw. 201 des Steckerteils 2 bzw. 200 möglich.

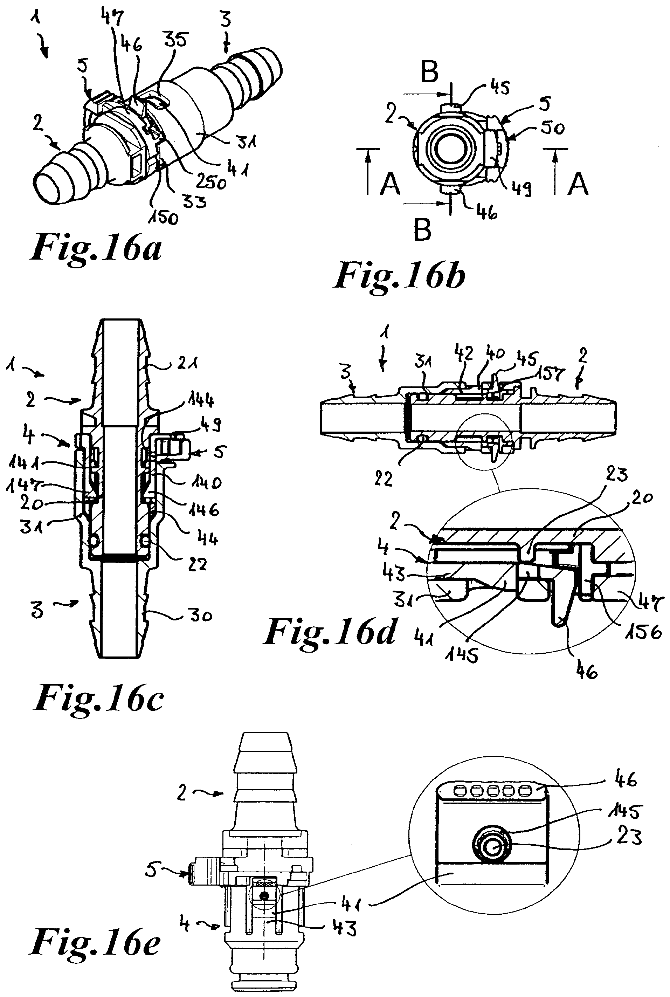

Bei dem Steckerteil 200 nach Figur 7 und dem Steckerteil 2 nach Figur 9 sind auf jeder der vier Flächen des mehrkantigen jeweiligen Aufnahmeabschnitts 20 bzw. 201 vorkragende Stiftelemente 23 bzw. 202 vorgesehen. Die vorkragenden Stiftelemente 23 bzw. 202 dienen einer Druckverriegelung bei im Innern des Steckerteils 2 bzw. 200 anliegendem Druck, also bei dort hindurch strömendem, unter Druck stehendem Medium. Zur Druckverriegelung liegen die vorkragenden Stiftelemente 23, 202 durch Verschiebung des Halteelements 4 gegenüber dem Steckerteil 2 in Axialrichtung des Halteelements 4 außerhalb einer jeweiligen Öffnung 145 in den Haltearmen 42, 43. Hierdurch wird ein radiales Bewegen der Haltearme 42, 43 blockiert, wie in Figur 17d und 17e gezeigt. Es wird somit ein solches axiales Spiel des Halteelements 4 auf dem Aufnahmeabschnitt 20 des Steckerteils 2 vorgesehen, dass dieses mindestens ausreichend weit von der Öffnung 145 zum Eintauchen des zumindest einen vorkragenden Stiftelements 23, 202 entfernt ist, so dass sich die Haltearme 42, 43 dann nicht in einer Löseposition befinden, wenn das vorkragende Stiftelement 23, 202 sich außerhalb der Öffnung 145 befindet. Durch die bei Anliegen eines Drucks im Innern des Anschlussverbinders 1 auftretende Axialverschiebung zwischen dem Steckerteil 2 und dem Halteelement 4 werden die vorkragenden Stiftelemente 23, 202 aus dem Bereich des Fluchtens mit den Öffnungen 145 heraus verschoben und sperren somit die Haltearme 42, 43 radial. Ein Betätigen der Haltearme 42, 43, um deren Rastnasen 40, 41 aus der Verrastung in den Verrastungsöffnungen 35, 36 in dem Muffenteil 3 zu lösen, wird somit in dieser Position unterbunden. Lediglich in der nicht axial verschobenen Position von Halteelement 4 und Steckerteil 2 ist ein Eintauchen der vorkragenden Stiftelemente 23, 202 in die Öffnungen 145 möglich und somit ein Betätigen der Haltearme 42, 43 nur ohne anliegenden Mediendruck im Innern des Anschlussverbinders 1. Die Öffnungen 145 in den beiden Haltearmen 42, 43 können insbesondere den Figuren 13e, 13h, 13i und 13l entnommen werden. In den Figuren 16a bis 16e, insbesondere 16d, ist eine solche freigegebene Druckverriegelung gezeigt, während die Figuren 17a bis 17e eine geblockte Druckverriegelung zeigen, bei der es den vorkragenden Stiftelementen 23 bzw. 202 nicht möglich ist, in die jeweilige Öffnung 145 in den beiden Haltearmen 42, 43 einzutauchen. Für eine Druckverriegelung ist somit eine axiale Beweglichkeit des Halteelements gegenüber dem Steckerteil vorgesehen. Wenn kein Mediendruck im Innern des Anschlussverbinders anliegt, ist ein Lösen des Steckerteils aus dem Muffenteil möglich. Hierbei kann durch manuelles Hineinstecken des Steckerteils 2 bis zum Anschlag, also bis in die weitestmögliche Position im Innern des Muffenteils, eine manuelle Entriegelung der Rastnasen 40, 41 der Haltearme 42, 43 aus ihrer Verrastung in den Verrastungsöffnungen 35, 36 oder einem Absatz oder einer Hinterschnittfläche als Verrastungsfläche 304, 405 in dem Muffenteil erfolgen.

Wie sich aus den Figuren 16a bis 16e und 17a bis 17e ebenfalls ergibt, ist dort das radial steckbare Verriegelungselement 5 nicht bzw. noch nicht in seine Endposition verbracht, ragt also über die Oberfläche insbesondere des Steckerteils, jedoch auch des Muffenteils seitlich noch wahrnehmbar heraus. Bei Vorsehen einer Druckverriegelung ist das Vorsehen des Steckerteils 2 und des Muffenteils 3 ausreichend. Das radial steckbare Verriegelungselement 5 kann hierbei weggelassen werden.

Außer durch die Winkelform unterscheiden sich die Steckerteile 2 und 200 nach den Figuren 7, 7a, 8, 8a, 9, 9a und 10, 10a nicht, da alle Steckerteile zum Aufdornen von insbesondere Rohr- oder Schlauchleitungen ausgebildet sind und dementsprechend jeweils einen Dornabschnitt 21 bzw. 203 aufweisen.

Wie den Steckerteilen 2 bis 200 in den Figuren 7 bis 10a, jedoch auch den übrigen Steckerteilen in den vorstehend bereits beschriebenen Figuren zu entnehmen ist, weisen diese jeweils nicht nur eine Aufnahmenut 24 bzw. 204 zum Aufnehmen des Dichtrings bzw. O-Rings 22 an einem Ende auf, sondern zwischen dem Aufnahmeabschnitt 20 bzw. 201 und dem jeweiligen Dornabschnitt 21 bzw. 203 eine jeweilige Angriffsöffnung bzw. zwei einander gegenüberliegende Angriffsöffnungen 25, 205. Diese dienen dem Angreifen beispielsweise durch einen Roboterarm zum Bewerkstelligen einer automatisierten Montage der Anschlussverbinder 1. Anstelle solcher Angriffsöffnungen 25, 205 können auch anderweitige Angriffsflächen vorgesehen werden, die bei einer automatisierten Montage von Robotern ergriffen bzw. an denen angegriffen werden kann, um einerseits den jeweiligen Steckerteil 2 bzw. 200 mit dem jeweiligen Halteelement 4 zu versehen und andererseits eine korrekte Montage des Halteelementes 4 auf dem Steckerteil zu ermöglichen, ebenso nachfolgend eine korrekte Montage des radial steckbaren Verriegelungselementes 5 an dem Halteelement 4 und gegebenenfalls auch des jeweiligen Muffenteils 3 bzw. 300 an Steckerteil mit Halteelement und radial steckbarem Verriegelungselement.

Die Figuren 11, 11a und 12, 12a zeigen noch einmal einzeln den Muffenteil 3 und den Muffenteil 300. Bei dem Muffenteil 300 ist deutlich der endseitig angeordnete Befestigungsstutzen 301 zu sehen, ebenfalls die im Innern des Muffenabschnitts 302 vorgesehene Verrastungsnut 303 mit ihrer Verrastungsfläche 304 zum Angreifen einer jeweiligen Rastnase 40 bzw. 41 der Haltearme 42, 43 des Halteelementes 4, das auf den jeweiligen Steckerteil 2 bzw. 200 aufgefügt wird. Ebenfalls ist beim Vergleich des Muffenteils 3 mit dem Muffenteil 300 ersichtlich, dass bei dem als Zerspanungsteil aus einem Metall ausgebildeten Muffenteil 300 am oberen Rand 305 weder radial noch axial Abschnitte vorstehen, somit kein Ineinandergreifen mit entsprechenden Nuten oder Stegen, wie den axialen Stegen 150, 250 vorgesehen wird. Dies begründet sich insbesondere damit, dass keine Verrastungsöffnungen in Form von Fensteröffnungen 35, 36 vorgesehen sind, die möglichst exakt von den Rastnasen 40, 41 durchgriffen werden müssen, um ein Verrasten der Rastnasen 40, 41 dort zu bewirken, sondern die Verrastungsnut 303 vorgesehen ist, die umlaufend im Innern des Muffenabschnitts 302 vorgesehen ist, so dass die jeweilige Position der Rastnasen 40, 41 entlang der Verrastungsnut 303 bezogen auf deren umlaufende Erstreckung wahlfrei ist. Anders ist dies, wie bereits vorstehend erläutert, bei dem mit den Fensteröffnungen bzw. Verrastungsöffnungen 35, 36 versehenen Muffenteil 3, bei dem sowohl der axial vorkragende Abschnitt 33 als auch der radial abstehende Abschnitt 34 für eine korrekte Positionierung des Muffenteils 3 am Steckerteil 2 oder Steckerteil 200 mit darauf jeweils aufgefügtem Halteelement 4 sorgen.

Die Figuren 18a bis 18d zeigen den Anschlussverbinder 1, bei dem der Steckerteil 2 endseitig anstelle eines Dornabschnitts oder anderweitigen Anschlussabschnitts mit einem Sensor 210 versehen ist. Der Sensor 210 ist auf den Steckerteil 2 aufgesteckt oder stoffschlüssig mit diesem verbunden und weist endseitig einen Elektro- und/oder Datenanschluss 211 auf wie insbesondere der Draufsicht auf diesen in Figur 18d entnommen werden kann. Über den Elektro- und/oder Datenanschluss 211 kann der Sensor 210 mit einer elektrischen Energiequelle und/oder einer Datenerfassungs- und/oder -verarbeitungseinheit (nicht gezeigt) angeschlossen werden. Auf das gegenüberliegende Ende des Steckerteils 2, das mit dem Aufnahmeabschnitt 20 mit darauf aufgefügtem Halteelement 4 und an diesem in Vormontageposition angestecktem radial steckbarem Verriegelungselement 5 versehen ist, kann wiederum der Muffenteil 3 aufgesteckt werden, wie vorstehend beschrieben. Gerade in den Figuren 18b, 18c sind das Sperrelement 51 mit endseitiger Rastnase 52 besonders gut zu sehen, die auf der Außenseite des Haltearms 140 aufliegt und durch den Muffenteil 3 bzw. dessen radial vorstehenden Abschnitt 34 betätigt und in die Öffnung 144 in dem Haltearm 140 gelenkt werden kann.

Die Figuren 15a bis 15d zeigen nach Art eines Baukastens die verschiedenen Arten von Steckerteilen und Muffenteilen, die miteinander beliebig kombiniert werden können. Zum Verrasten von Steckerteil und Muffenteil ist dabei jeweils das Halteelement 4 vorgesehen und zum zusätzlichen Sperren der verrasteten Position von Steckerteil mit Halteelement und Muffenteil das radial steckbare Verriegelungselement 5 an dem Halteelement 4. Zum Abdichten des Steckerteils 2 bzw. 200 in dem jeweiligen Muffenteil ist ferner auch der Dichtring bzw. O-Ring 22 gezeigt.

Anstelle der bereits vorstehend beschriebenen Muffenteile 3 mit Dornabschnitt 30 und Muffenteil 300 in Form eines Zerspanungsteils ist zusätzlich in den Figuren 15a bis 15d die Ausführungsvariante eines Muffenteils 400 mit einem Sechskantabschnitt 401 gezeigt, wobei der Muffenteil 400 zum Schraubverbinden mit einer Rohrleitung oder einem Aggregat vorgesehen ist, wobei über den Sechskantabschnitt entsprechend ein Angreifen und Festhalten beim Aufschrauben des Muffenteils 400 möglich ist. Zum Verbinden mit einer Rohrleitung weist der Muffenteil 400 einen Verbindungsabschnitt 402 auf. Über einen Muffenabschnitt 403 ist wiederum eine Verbindung mit dem Steckerteil 2 bzw. 200 mit darauf aufgefügtem Halteelement 4 möglich. Der Muffenabschnitt 403 weist, entsprechend dem Muffenabschnitt 302 des Muffenteils 300 ebenfalls eine Verrastungsnut 404 mit Verrastungsfläche 405 zum Verrasten der Rastnasen 40 bzw. 41 an den Haltearmen 42 bzw. 43 des Halteelementes 4 auf.

Es können somit wahlweise beispielsweise die drei Ausführungsvarianten von Muffenteilen 3, 300 bzw. 400 mit einem der Ausführungsvarianten von Steckerteilen 2 bzw. 200 kombiniert werden. In den Figuren 15a bis 15d sind die Steckerteile 2 bzw. 200 jeweils ohne vorkragende Stiftelemente 23 bzw. 202 gezeigt. Diese können zum Vorsehen einer Druckverriegelung jedoch ebenfalls auf den jeweiligen Aufnahmeabschnitten 20 bzw. 201 angeordnet sein.

In Figur 15c ist besonders gut in perspektivischer Ansicht die Vormontageposition des radial steckbaren Verriegelungselementes 5 auf dem Halteelement 4 zu sehen. Hierbei lagert das Sperrelement 51 mit seiner Rastnase 52 noch auf der Außenseite des Haltearms 40 des Halteelementes 4, benachbart, jedoch noch nicht in Eingriff mit der Durchgangsöffnung 144 dort. Ebenfalls ist ersichtlich, dass durch den radial abstehenden Abschnitt 34 an dem Sperrelement 51 angegriffen und dieses in Steckrichtung des Muffenteils 3, in Richtung des Steckerteils 2, gedrückt und hierdurch die Rastnase 52 in Positionierung fluchtend über der Durchgangsöffnung gedrückt werden kann. In letzterer Position ist ein Hineindrücken des radial steckbaren Verriegelungselements 5 in seine Endposition möglich, sofern die Halteelemente 42, 43 vollständig ausgelenkt sind, wobei das Sperrelement 51 in der Durchgangsöffnung 144 liegt und die Rastnase 52 sich im Innern des Halteelements 4 auf der Unterseite des Haltearms 40 am die Durchgangsöffnung 144 umgebenden Rand verrastet, sich also dort innen an dem Haltearm 40 festhält und gegen ein ungewolltes Herausziehen des Sperrelements 51 mit Rastnase 52 wirkt. Zu sehen ist in Figur 15c ebenfalls die Anordnung des Schenkels 53 benachbart zu dem Haltearm 43 mit Rastnase 41 und Betätigungselement 46.

Durch das Vorsehen des radial steckbaren Verriegelungselementes 5 ist somit eine zusätzliche Sperrfunktion für die Haltearme 42, 43 des Halteelementes 4 möglich. Dies bringt nicht nur im Hinblick auf in Abzugsrichtung von Steckerteil und Muffenteil wirkende Kräfte, sondern auch bei seitlichen Belastungskräften auf den gesteckten Anschlussverbinder Vorteile im Hinblick auf eine noch bessere und sicherere Steckverbindung mit sich.

Das radial steckbare Verriegelungselement 5 bzw. die Verriegelungseinrichtung . umfasst somit als Hauptfunktion das Sichern von gestecktem Steckerteil und Muffenteil gegen ein ungewolltes Lösen. Ferner findet eine Steckkontrolle in zweierlei Richtung statt, einerseits dadurch, dass das radial steckbare Verriegelungselement bzw. die Verriegelungseinrichtung lediglich dann zu betätigen ist, wenn der Steckerteil vollständig in den Muffenteil eingesteckt ist. andererseits dadurch, dass der Steckerteil nicht steckbar ist, wenn das radial steckbare Verriegelungselement bzw. die Verriegelungseinrichtung sich in der Verriegelungsposition befindet. Auch ist eine Sperrfunktion gegen ein unbeabsichtigtes Einschieben des Verriegelungselements in die Öffnung in dem Halteelement vorgesehen. Zudem findet eine doppelte Abfrage des Steckzustands im Bereich der Haltearme und bezüglich des zungenartigen Sperrelements und dessen endseitigen nasenförmigen Rastabschnitts statt. Ferner weist das radial steckbare Verriegelungselement bzw. die Verriegelungseinrichtung eine Stützfunktion auf für Steckerteil, Muffenteil und Halteelement. Abgefragt werden können ebenfalls Optik und/oder Haptik, um eine korrekte Steckposition von Steckerteil und Muffenteil ermitteln zu können. Außerdem weist das radial steckbare Verriegelungselement bzw. die Verriegelungseinrichtung eine Verliersicherung auf, um verliersicher auf dem Halteelement gehalten zu werden, insbesondere in einer (ersten) Vormontageposition.

Die Anschlussverbinder sind insbesondere für Schlauch- und/oder Rohrleitungen vorgesehen. Bei diesen sind jeweils zumindest ein Muffenteil und zumindest ein Steckerteil vorgesehen, wobei der Steckerteil in einen Muffenabschnitt des Muffenteils einsteckbar oder eingesteckt ist. Ein Halteelement ist zum lösbaren Verriegeln des Steckerteils in den Muffenteil vorgesehen, wobei das Halteelement auf einen Aufnahmeabschnitt des Steckerteils verliersicher montierbar oder montiert ist und zumindest einen Abschnitt aufweist, der radial aufweitbar ist und zumindest einen Haltearm umfasst, der mit zumindest einer außenseitig auskragenden Rastnase versehen ist, wobei der Haltearm in radialer Richtung bezüglich des Steckerteils federelastisch bewegbar ist, um die zumindest eine Rastnase an zumindest einer Verrastungsfläche oder Verrastungsöffnung des Muffenteils zu verrasten und aus der Verrastungsposition wieder lösen zu können, wobei zumindest eine zweite Verriegelungseinrichtung zum Verriegeln und Sperren der Verrastungsposition von Steckerteil und Verriegelungselement und Muffenteil vorgesehen ist.

### Bezugszeichenliste

- 1: Anschlussverbinder
- 2: Steckerteil
- 3: Muffenteil
- 4: Halteelement
- 5: radial steckbares Verriegelungselement
- 20: Aufnahmeabschnitt
- 21: Dornabschnitt
- 22: Dichtring/O-Ring
- 23: vorkragendes Stiftelement
- 24: Aufnahmenut
- 25: Angriffsöffnung
- 26: Absatz
- 27: Absatz
- 30: Dornabschnitt
- 31: Muffenabschnitt
- 32: oberer Rand
- 33: axial vorkragender Abschnitt
- 34: radial abstehender Abschnitt
- 35: Fensteröffnung/Verrastungsöffnung
- 36: Fensteröffnung/Verrastungsöffnung
- 37: Absatz
- 40: Rastnase
- 41: Rastnase
- 42: Haltearm
- 43: Haltearm
- 44: Halteelementkörper
- 45: Betätigungselement
- 46: Betätigungselement
- 47: wulstartig vorstehender endseitiger Rand
- 48: vorkragender Abschnitt
- 49: Radialabschnitt
- 50: Nut/Aussparung
- 51: Sperrelement
- 52: Rastnase
- 53: Schenkel
- 54: Schenkel
- 55: Querabschnitt
- 56: Nocken
- 57: Nocken
- 140: Haltearm
- 141: Haltearm
- 142: freies Ende
- 143: freies Ende
- 144: Durchgangsöffnung
- 145: Öffnung
- 146: Rastnase an 140
- 147: Rastnase an 141
- 148: durchgehender Rand
- 149: axialer Steg
- 150: axialer Steg
- 153: Sperrabschnitt
- 154: Sperrabschnitt
- 155: Riffelung
- 156: Verliersicherungsabschnitt
- 157: Verliersicherungsabschnitt
- 158: Führungssteg
- 159: Führungssteg
- 200: Winkelsteckerteil
- 201: Aufnahmeabschnitt
- 202: vorkragendes Stiftelement
- 203: Dornabschnitt
- 204: Aufnahmenut
- 205: Angriffsöffnung
- 206: Absatz
- 207: Absatz
- 240: freies Ende
- 241: freies Ende
- 210: Sensor
- 211: Elektro- und/oder Datenanschluss
- 242: festliegendes Ende
- 243: festliegendes Ende
- 244: festliegendes Ende
- 245: festliegendes Ende
- 249: axialer Steg
- 250: axialer Steg
- 300: Muffenteil
- 301: Befestigungsstutzen
- 302: Muffenabschnitt
- 303: Verrastungsnut
- 304: Verrastungsfläche
- 305: oberer Rand
- 306: Absatz im Muffenteil
- 400: Muffenteil
- 401: Sechskantabschnitt
- 402: Verbindungsabschnitt
- 403: Muffenabschnitt
- 404: Verrastungsnut
- 405: Verrastungsfläche
- a: Abstand zwischen Frontseite Steckerteil 2 und Absatz 37 im Muffenteil 3 in nicht verrasteter Position
- a1: Abstand zwischen Frontseite Steckerteil 2 und Absatz 37 im Muffenteil 3 in Endposition
- a2: Abstand zwischen Frontseite Steckerteil 2 und Absatz 306 im Muffenteil 300 in Endposition
- P1: Druckkraft
- P2: Druckkraft

## Patentansprüche

1. Anschlussverbinder (1), insbesondere für Schlauch- und/oder
Rohrleitungen, umfassend zumindest einen Muffenteil (3,300,400), zumindest ein Halteelement (4), zumindest eine Verriegelungseinrichtung und zumindest einen Steckerteil (2,200), wobei der Steckerteil (2,200) in einen Muffenabschnitt (31,302,403) des Muffenteils (3,300,400) einsteckbar oder eingesteckt ist und wobei das zumindest eine Halteelement (4) zum lösbaren Halten des Steckerteils (2,200) in dem Muffenteil (3,300,400) vorgesehen ist, wobei der Steckerteil (2,200) mit dem Halteelement (4) versehen und verbunden ist, wobei das Halteelement (4) verliersicher auf einem Aufnahmeabschnitt (20,201) des Steckerteils (2,200) montiert ist, und wobei das Halteelement (4) zumindest einen Haltearm (42,43) mit zumindest einer außenseitig auskragenden Rastnase (40,41) aufweist, wobei der zumindest eine Haltearm (42,43) ein freies Ende (142,143) und ein an einem Halteelementkörper (44) festes Ende (242,243) aufweist und in radialer Richtung bezüglich des Steckerteils (2,200) federelastisch bewegbar ist zum Verrasten der zumindest einen Rastnase (40,41) an zumindest einer Verrastungsfläche (304,405) oder einer Verrastungsöffnung (35,36) des Muffenteils (3,300,400) und Lösen von dieser, und wobei die zumindest eine Verriegelungseinrichtung zum Sichern des Verrastungszustands von Steckerteil (2,200) und Muffenteil (3,300,400) und zum Anzeigen einer Fehlmontage von diesen vorgesehen ist, wobei die zumindest eine Verriegelungseinrichtung mit dem zumindest einen Halteelement (4) zusammenwirkt,
**dadurch gekennzeichnet, dass**
die zumindest eine Verriegelungseinrichtung ein radial steckbares Verriegelungselement (5) ist, das mit dem Halteelement (4) im Bereich von dessen zumindest einen Haltearm (42,43) zusammenwirkt und radial bezüglich Halteelement (4) bzw. Steckerteil (2, 200) und Muffenteil (3, 300, 400) beweglich ist und das an dem Halteelement (4) vormontiert und von einer Vormontageposition in eine Verriegelungsposition verschiebbar ist.

2. Anschlussverbinder (1) nach Anspruch 1,
**dadurch gekennzeichnet, dass**
das radial steckbare Verriegelungselement (5) in der Draufsicht u-förmig ist mit zwei Schenkeln (53,54) und einem zwischen diesen angeordneten Querabschnitt (55), wobei zumindest ein Abschnitt der Schenkel (53,54) oder an den Schenkeln zum Eingreifen zwischen dem freien Ende (142,143) des zumindest einen Haltearms (42,43) und dem Steckerteil (2,200) dient.

3. Anschlussverbinder (1) nach Anspruch 2,
**dadurch gekennzeichnet, dass** die Schenkel (53,54) des radial steckbaren Verriegelungselements (5) eine solche Formgebung und einen solchen Abstand zueinander aufweisen, dass sie bei vollständigem Aufstecken auf das Halteelement (4) an zwei einander gegenüberliegenden Haltearmen (42,43) angreifen, um diese radial in einer beabstandeten Position zu dem Steckerteil (2,200) zu halten, insbesondere die Schenkel (53, 54) Sperrabschnitte (153,154) aufweisen zum sperrenden Hintergreifen der Haltearme (42,43) des Halteelements (4).

4. Anschlussverbinder (1) nach einem der Ansprüche 2 oder 3,
**dadurch gekennzeichnet, dass**
der Querabschnitt (55) des radial steckbaren Verriegelungselements (5) mit zumindest einem vorkragenden, in zumindest eine Öffnung (144) in dem Halteelement (4) eingreifbaren oder eingreifenden Sperrelement (51) versehen ist, insbesondere das Sperrelement (51) zungenartig ist und ein an dem Querabschnitt (55) befestigtes oder festes Ende und ein freies Ende aufweist, wobei das freie Ende endseitig mit zumindest einem abstehenden nasenförmigen Rastabschnitt (52) versehen ist.

5. Anschlussverbinder (1) nach Anspruch 4,
**dadurch gekennzeichnet, dass**
das Sperrelement (51) und ein Rand (32) oder ein radial vorstehender Abschnitt (34) des Muffenteils (3,300,400) so zusammenwirkbar oder zusammenwirkend sind, dass das Sperrelement (51) durch den Rand (32) oder den radial vorstehenden Abschnitt (34) axial freigebbar und in eine Öffnung (144) des Halteelements (4) lenkbar ist.

6. Anschlussverbinder (1) nach Anspruch 4 oder 5,
**dadurch gekennzeichnet dass**,
der nasenförmige Rastabschnitt (52) zum Verhindern eines radialen Verschiebens der Verriegelungseinrichtung in eine Verriegelungsposition, bei der das Sperrelement (51) in die Öffnung (144) in dem Halteelement (4) eingreift, und zum Sichern des Sperrelements (51) gegen ein selbständiges Herausbewegen, Herausgleiten oder Lösen aus dieser Öffnung (144) dient.

7. Anschlussverbinder (1) nach einem der vorstehenden Ansprüche, **dadurch gekennzeichnet, dass**
der Steckerteil (2,200), insbesondere der Aufnahmeabschnitt (20,201) an dem Steckerteil (2,200), mit zumindest einer mit dem Halteelement (4) zusammenwirkenden Einrichtung (23,202) zur Druckverriegelung versehen ist, die ein Entriegeln des Halteelements (4) bei im Innern des Anschlussverbinders (1) anliegendem Mediendruck verhindert.

8. Anschlussverbinder (1) nach einem der vorstehenden Ansprüche, **dadurch gekennzeichnet, dass**
bei zweiteiligem Ausbilden von Steckerteil (2,200) und Halteelement (4) zumindest eines von beiden mit einer Verdrehsicherung versehen ist, insbesondere der Steckerteil (2,200) außenseitig in zumindest einem Abschnitt (20,201) mehrkantig ausgebildet ist.

9. Anschlussverbinder (1) nach einem der vorstehenden Ansprüche, **dadurch gekennzeichnet, dass**
der Muffenteil (3,300,400) zumindest eine Verdrehsicherung (33,34) und/oder Positionierhilfe aufweist, insbesondere zumindest ein vorkragendes Element (33,34) und/oder zumindest eine gegen Verdrehen oder Fehlpositionieren sichernde Fläche oder Formgebung aufweist und/oder dass der Muffenteil (3) aus zumindest einem Kunststoffmaterial besteht und mit der zumindest einen mantelseitigen Verrastungsöffnung (35,36) versehen ist oder als Zerspanungsteil (300,400), insbesondere aus zumindest einem Metall, ausgebildet und mit zumindest einer Hinterschnittfläche als Verrastungsfläche (304,405) zum Verrasten der zumindest einen Rastnase (40,41) des Haltearms (42,43) des zumindest einen Halteelements (4) versehen ist.

10. Anschlussverbinder (1) nach einem der vorstehenden Ansprüche,
**dadurch gekennzeichnet, dass**
eine Transportsicherungsposition der Verriegelungseinrichtung (5) vorgesehen ist, wobei das zumindest eine Sperrelement (51) verhindert, dass die Verriegelungseinrichtung bei nicht vollständig gestecktem Steckerteil (2,200) und Muffenteil (3,300,400) radial in seine Endposition verbringbar, insbesondere schiebbar, ist.

11. Anschlussverbinder (1) nach einem der Ansprüche 4 bis 10,
**dadurch gekennzeichnet, dass**
die Verriegelungseinrichtung nur dann vollständig in ihre Endposition verbringbar ist, wenn das Sperrelement (51) in die Öffnung (144) hineinragt und/oder der nasenförmige Rastabschnitt (52) des Sperrelements (51) in der Öffnung (144) liegt und die Haltearme (42,43) des Halteelements (4) radial beweglich sind.

12. Anschlussverbinder (1) nach einem der vorstehenden Ansprüchen, **dadurch gekennzeichnet, dass**
das Halteelement (4) axial beidseitig endseitig einen unterbrechungsfreien, durchgehenden Rand (47,148) aufweist.

13. Anschlussverbinder (1) nach einem der vorstehenden
Ansprüche,
**dadurch gekennzeichnet, dass**
der Steckerteil (2,200) mit zumindest einer mit dem Halteelement (4) zusammenwirkenden Einrichtung (23,202) zur Druckverriegelung versehen ist, die ein Entriegeln des Halteelements (4) bei im Innern des Anschlussverbinders (1) anliegendem Mediendruck verhindert.

14. Anschlussverbinder (1) nach Anspruch 13,
**dadurch gekennzeichnet, dass**
die Druckverriegelungseinrichtung zumindest ein von der Außenseite des Aufnahmeabschnitts (20,201) des Steckerteils (2,200) vorkragendes Element (23,202), insbesondere zumindest einen vorkragenden Stift oder zumindest eine vorkragende Erhebung, und das Halteelement (4) zumindest eine Öffnung (145) in zumindest einem seiner Haltearme (42,43) umfasst, insbesondere zur Druckverriegelung das vorkragende Element (23,202) durch Verschiebung des Halteelements (4) gegenüber dem Steckerteil (2,200) in Axialrichtung des Halteelements (4) außerhalb einer Öffnung (145) in dem Halteelement (4) liegt und hierdurch ein radiales Bewegen des Haltearms (42,43) oder der Haltearme (42,43) blockiert.

15. Anordnung eines Halteelements (4) und zumindest einer Verriegelungseinrichtung für einen Anschlussverbinder (1) nach einem der
vorstehenden Ansprüche, umfassend zumindest einen Muffenteil (3,300,400) und zumindest einen Steckerteil (2,200), wobei der Steckerteil (2,200) in einen Muffenabschnitt (31,302,403) des Muffenteils (3,300,400) einsteckbar oder eingesteckt ist und wobei das Halteelement (4) auf den Steckerteil (2,200) montierbar oder montiert ist zum lösbaren Halten des Steckerteils (2,200) in dem Muffenteil (3,300,400),
**dadurch gekennzeichnet, dass**
das Halteelement (4) Haltearme (140,141) mit nach innen bezüglich des Halteelements (4) gerichteten Rastnasen (146,147) zum Festhalten an einem entsprechend geformten Absatz oder Element auf der Außenseite eines Aufnahmeabschnitts (20,201) des Steckerteils (2) und Haltearme (42,43) mit nach außen bezüglich des Halteelements (4) gerichteten Rastnasen (40,41) zum Verrasten in Verrastungsöffnungen des Muffenteils (3,300,400) aufweist, wobei die zumindest eine Verriegelungseinrichtung zum Sichern des Verrastungszustands von Steckerteil (2,200) und Muffenteil (3,300,400) und zum Anzeigen einer Fehlmontage von diesen vorgesehen ist, wobei die zumindest eine Verriegelungseinrichtung ein radial steckbares Verriegelungselement (5) ist, das mit dem Halteelement (4) im Bereich von dessen zumindest einen Haltearm (42,43) zusammenwirkt und radial bezüglich des Halteelements (4) beweglich und vormontiert an dem Halteelement (4) ist und von einer Vormontageposition in eine Verriegelungsposition verschiebbar ist.

## Claims

1. Connector (1), in particular for hose lines and/or pipelines, comprising at least one socket part (3, 300, 400), at least one holding element (4), at least one locking device and at least one plug part (2, 200), wherein the plug part (2, 200) is able to be inserted or has been inserted into a socket portion (31, 302, 403) of the socket part (3, 300 400) and wherein the at least one holding element (4) is provided for releasably holding the plug part (2, 200) in the socket part (3, 300, 400), wherein the plug part (2, 200) is provided with and connected to the holding element (4), wherein the holding element (4) is mounted on a receiving portion (20, 201) of the plug part (2, 200) in such a manner that it is secured against loss, and wherein the holding element (4) has at least one holding arm (42, 43) with at least one externally protruding latching lug (40, 41), wherein the at least one holding arm (42, 43) has a free end (142, 143) and an end (242, 243) fixed to a holding element body (44) and is resiliently movable in a radial direction with respect to the plug part (2, 200) in order to latch the at least one latching lug (40, 41) on at least one latching surface (304, 405) or a latching opening (35, 36) of the socket part (3, 300, 400) and to release it therefrom, and wherein the at least one locking device is provided for securing the latched state of the plug part (2, 200) and the socket part (3, 300, 400) and for indicating incorrect assembly thereof, wherein the at least one locking device cooperates with the at least one holding element (4), **characterised in that**
the at least one locking device is a radially insertable locking element (5) which cooperates with the holding element (4) in the region of the at least one holding arm (42, 43) thereof and is movable radially with respect to the holding element (4), or the plug part (2, 200), and the socket part (3, 300, 400) and which is pre-assembled on the holding element (4) and is displaceable from a pre-assembled position into a locking position.

2. Connector (1) according to claim 1,
**characterised in that**
the radially insertable locking element (5), when seen from above, is U-shaped with two legs (53, 54) and a transverse portion (55) arranged therebetween, wherein at least one portion of the legs (53, 54) or on the legs serves to engage between the free end (142, 143) of the at least one holding arm (42, 43) and the plug part (2, 200).

3. Connector (1) according to claim 2,
**characterised in that**
the legs (53, 54) of the radially insertable locking element (5) have such a shape and are at such a distance from one another that, when they are fully fitted onto the holding element (4), they are in contact with two mutually opposite holding arms (42, 43) in order to hold them radially in a spaced-apart position relative to the plug part (2, 200), in particular the legs (53, 54) have blocking portions (153, 154) for engaging in a blocking manner behind the holding arms (42, 43) of the holding element (4).

4. Connector (1) according to either claim 2 or claim 3,
**characterised in that**
the cross section (55) of the radially insertable locking element (5) is provided with at least one protruding blocking element (51) which is able to engage or engages in at least one opening (144) in the holding element (4), in particular the blocking element (51) is lug-shaped and has an end fastened to the transverse portion (55) or fixed and a free end, wherein the free end is provided at the end with at least one projecting lug-shaped latching portion (52).

5. Connector (1) according to claim 4,
**characterised in that**
the blocking element (51) and an edge (32) or a radially projecting portion (34) of the socket part (3, 300, 400) are able to cooperate or cooperate in such a manner that the blocking element (51) can be axially freed by the edge (32) or the radially projecting portion (34) and guided into an opening (144) of the holding element (4).

6. Connector (1) according to claim 4 or 5,
**characterised in that**
the lug-shaped latching portion (52) serves to prevent the locking device from being displaced radially into a locking position in which the blocking element (51) engages into the opening (144) in the holding element (4), and to secure the blocking element (51) against independently moving out of, sliding out of or being released from that opening (144).

7. Connector (1) according to any one of the preceding claims,
**characterised in that**
the plug part (2, 200), in particular the receiving portion (20, 201) on the plug part (2, 200), is provided with at least one device (23, 202) for pressure locking that cooperates with the holding element (4), which device prevents the holding element (4) from being unlocked when media pressure is present inside the connector (1).

8. Connector (1) according to any one of the preceding claims,
**characterised in that**
in the case where the plug part (2, 200) and the holding element (4) are in two-part form, at least one of the two is provided with an anti-rotation means, in particular the plug part (2, 200) is of polygonal form externally in at least one portion (20, 201).

9. Connector (1) according to any one of the preceding claims,
**characterised in that**
the socket part (3, 300, 400) has at least one anti-rotation means (33, 34) and/or positioning aid, in particular at least one protruding element (33, 34) and/or at least one surface or shaping that secures against rotation and/or incorrect positioning, and/or **in that** the socket part (3) consists of at least one plastics material and is provided with the at least one latching opening (35, 36) in the lateral surface or is in the form of a machined part (300, 400), in particular of at least one metal, and is provided with at least one undercut surface as a latching surface (304, 305) for latching of the at least one latching lug (40, 41) of the holding arm (42, 43) of the at least one holding element (4).

10. Connector (1) according to any one of the preceding claims,
**characterised in that**
a transport securing position of the locking device (5) is provided, wherein the at least one blocking element (51) prevents the locking device from being able to be brought, in particular pushed, radially into its end position when the plug part (2, 200) and the socket part (3, 300, 400) are not fully inserted.

11. Connector (1) according to any one of claims 4 to 10,
**characterised in that**
the locking device is able to be brought fully into its end position only when the blocking element (51) projects into the opening (144) and/or the lug-shaped latching portion (52) of the blocking element (51) is located in the opening (144) and the holding arms (42, 43) of the holding element (4) are radially movable.

12. Connector (1) according to any one of the preceding claims,
**characterised in that**
the holding element (4) has an uninterrupted, continuous edge (47, 148) axially on both sides at the ends.

13. Connector (1) according to any one of the preceding claims,
**characterised in that**
the plug part (2, 200) is provided with at least one device (23, 202) for pressure locking that cooperates with the holding element (4), which device prevents the holding element (4) from being unlocked when media pressure is present inside the connector (1).

14. Connector (1) according to claim 13,
**characterised in that**
the pressure locking device comprises at least one element (23, 202) protruding from the outside of the receiving portion (20, 201) of the plug part (2, 200), in particular at least one protruding pin or at least one protruding elevation, and the holding element (4) comprises at least one opening (145) in at least one of its holding arms (42, 43), in particular for pressure locking the protruding element (23, 202), by displacement of the holding element (4) relative to the plug part (2, 200), is located outside an opening (145) in the holding element (4) in the axial direction of the holding element (4) and hereby blocks a radial movement of the holding arm (42, 43) or of the holding arms (42, 43).

15. Arrangement of a holding element (4) and of at least one locking device for a connector (1) according to any one of the preceding claims, comprising at least one socket part (3, 300, 400) and at least one plug part (2, 200), wherein the plug part (2, 200) is able to be inserted or has been inserted into a socket portion (31, 302, 403) of the socket part (3, 300, 400) and wherein the holding element (4) is able to be mounted or has been mounted on the plug part (2, 200) in order to releasably hold the plug part (2, 200) in the socket part (3, 300, 400), **characterised in that**
the holding element (4) has holding arms (140, 141) with latching lugs (146, 147) that are oriented inwards with respect to the holding element (4) for fixing to a correspondingly shaped shoulder or element on the outside of a receiving portion (20, 201) of the plug part (2) and holding arms (42, 43) with latching lugs (40, 41) that are oriented outwards with respect to the holding element (4) for latching in latching openings of the socket part (3, 300, 400), wherein the at least one locking device is provided for securing the latched state of the plug part (2, 200) and the socket part (3, 300, 400) and for indicating incorrect assembly thereof, wherein the at least one locking device is a radially insertable locking element (5) which cooperates with the holding element (4) in the region of the at least one holding arm (42, 43) thereof and is movable radially with respect to the holding element (4) and is pre-assembled on the holding element (4) and is displaceable from a pre-assembled position into a locking position.

## Revendications

1. Connecteur (1), en particulier pour tuyaux et/ou canalisations, comprenant au moins une partie de manchon (3, 300, 400), au moins un élément de maintien (4), au moins un dispositif de verrouillage et au moins une partie de connecteur (2, 200), dans lequel la partie de connecteur (2, 200) peut être enfichée ou est enfichée dans une section de manchon (31, 302, 403) de la partie de manchon (3, 300, 400) et dans lequel l'au moins un élément de maintien (4) est prévu pour maintenir de manière détachable la partie de connecteur (2, 200) dans la partie de manchon (3, 300, 400), dans lequel la partie de connecteur (2, 200) est pourvue de et reliée à l'élément de maintien (4),
dans lequel l'élément de maintien (4) est monté de manière imperdable sur une section de réception (20, 201) de la partie de connecteur (2, 200), et dans lequel l'élément de maintien (4) présente au moins un bras de maintien (42, 43) avec au moins un bec d'encliquetage (40, 41) en saillie extérieure, dans lequel l'au moins un bras de maintien (42, 43) présente une extrémité libre (142, 143) et une extrémité fixe (242, 243) sur un corps d'élément de maintien (44) et peut être déplacé de manière élastique dans une direction radiale par rapport à la partie de connecteur (2, 200) pour encliqueter l'au moins un bec d'encliquetage (40, 41) sur au moins une surface d'encliquetage (304, 405) ou une ouverture d'encliquetage (35, 36) de la partie de manchon (3, 300, 400) et se détacher de celle-ci, et dans lequel l'au moins un dispositif de verrouillage est prévu pour sécuriser l'état d'encliquetage de la partie de connecteur (2, 200) et de la partie de manchon (3, 300, 400) et pour indiquer un mauvais montage de celles-ci, dans lequel l'au moins un dispositif de verrouillage coopère avec l'au moins un élément de maintien (4), **caractérisé en ce que**
l'au moins un dispositif de verrouillage est un élément de verrouillage (5) enfichable radialement qui coopère avec l'élément de maintien (4) dans la zone de l'au moins un bras de maintien (42, 43) de celui-ci et est mobile radialement par rapport à l'élément de maintien (4) ou à la partie de connecteur (2, 200) et à la partie de manchon (3, 300, 400) et qui est prémonté sur l'élément de maintien (4) et peut être déplacé d'une position de prémontage dans une position de verrouillage.

2. Connecteur (1) selon la revendication 1,
**caractérisé en ce que**
l'élément de verrouillage (5) enfichable radialement est en forme de U en vue de dessus avec deux branches (53, 54) et une section transversale (55) disposée entre celles-ci, dans lequel au moins une section des branches (53, 54) ou sur les branches sert à s'insérer entre l'extrémité libre (142, 143) de l'au moins un bras de maintien (42, 43) et la partie de connecteur (2, 200).

3. Connecteur (1) selon la revendication 2,
**caractérisé en ce que**
les branches (53, 54) de l'élément de verrouillage (5) enfichable radialement présentent une forme et une distance les unes par rapport aux autres telles qu'elles agissent sur deux bras de maintien (42, 43) opposés l'un à l'autre lors de l'enfichage complet sur l'élément de maintien (4) pour les maintenir radialement dans une position éloignée de la partie de connecteur (2, 200), en particulier les branches (53, 54) présentent des sections de blocage (153, 154) pour le serrage arrière de blocage des bras de maintien (42, 43) de l'élément de maintien (4).

4. Connecteur (1) selon l'une quelconque des revendications 2 ou 3,
**caractérisé en ce que**
la section transversale (55) de l'élément de verrouillage (5) enfichable radialement est pourvue d'au moins un élément de blocage (51) en saillie, pouvant s'insérer ou s'insérant dans au moins une ouverture (144) dans l'élément de maintien (4), en particulier l'élément de blocage (51) est en forme de languette et présente une extrémité fixée ou fixe sur la section transversale (55) et une extrémité libre, dans lequel l'extrémité libre est pourvue côté extrémité d'au moins une section d'encliquetage en forme de bec (52) en saillie.

5. Connecteur (1) selon la revendication 4,
**caractérisé en ce que**
l'élément de blocage (51) et un bord (32) ou une section radialement en saillie (34) de la partie de manchon (3, 300, 400) peuvent coopérer ou sont coopérantes de sorte que l'élément de blocage (51) puisse être libéré axialement par le bord (32) ou la section radialement en saillie (34) et puisse être dirigé dans une ouverture (144) de l'élément de maintien (4).

6. Connecteur de raccordement (1) selon la revendication 4 ou 5,
**caractérisé en ce que**
la section d'encliquetage en forme de bec (52) sert à empêcher un déplacement radial du dispositif de verrouillage dans une position de verrouillage dans laquelle l'élément de verrouillage (51) s'insère dans l'ouverture (144) dans l'élément de maintien (4), et à bloquer l'élément de verrouillage (51) pour éviter qu'il se déplace, glisse ou se détache tout seul de cette ouverture (144).

7. Connecteur de raccordement (1) selon l'une quelconque des revendications précédentes,
**caractérisé en ce que**
la partie de connecteur (2, 200), en particulier la section de réception (20, 201) sur la partie de connecteur (2, 200), est pourvue d'au moins un dispositif (23, 202) de verrouillage par pression coopérant avec l'élément de maintien (4), qui empêche un déverrouillage de l'élément de maintien (4) en présence d'une pression de fluide à l'intérieur du connecteur de raccordement (1).

8. Connecteur de raccordement (1) selon l'une quelconque des revendications précédentes,
**caractérisé en ce que**
dans le cas d'une réalisation en deux parties de la partie de connecteur (2, 200) et de l'élément de maintien (4), au moins l'un des deux est pourvu d'une sécurité antirotation, en particulier la partie de connecteur (2, 200) est réalisée de manière polygonale côté extérieur dans au moins une section (20, 201).

9. Connecteur de raccordement (1) selon l'une quelconque des revendications précédentes,
**caractérisé en ce que**
la partie de manchon (3, 300, 400) présente au moins une sécurité antirotation (33, 34) et/ou une aide au positionnement, en particulier présente au moins un élément en saillie (33, 34) et/ou au moins une surface ou forme sécurisant contre une rotation ou un mauvais positionnement et/ou que la partie de manchon (3) est constituée d'au moins un matériau plastique et est pourvue de l'au moins une ouverture d'encliquetage (35, 36) côté gaine ou est réalisée en tant que pièce usinée par enlèvement de copeaux (300, 400), en particulier composée d'au moins un métal, et est pourvue d'au moins une
surface de dégagement comme surface d'encliquetage (304, 405) pour l'encliquetage de l'au moins un bec d'encliquetage (40, 41) du bras de maintien (42, 43) de l'au moins un élément de maintien (4).

10. Connecteur de raccordement (1) selon l'une quelconque des revendications précédentes,
**caractérisé en ce que**
une position de sécurisation de transport du dispositif de verrouillage (5) est prévue, dans lequel l'au moins un élément de blocage (51) empêche que le dispositif de verrouillage puisse être amené, en particulier poussé, radialement dans sa position finale lorsque la partie de connecteur (2, 200) et la partie de manchon (3, 300, 400) ne sont pas complètement enfichées.

11. Connecteur (1) selon l'une quelconque des revendications 4 à 10,
**caractérisé en ce que**
le dispositif de verrouillage ne peut être amené complètement dans sa position finale que si l'élément de blocage (51) pénètre dans l'ouverture (144) et/ou si la section d'encliquetage en forme de bec (52) de l'élément de blocage (51) se trouve dans l'ouverture (144) et si les bras de maintien (42, 43) de l'élément de maintien (4) sont mobiles radialement.

12. Connecteur de raccordement (1) selon l'une quelconque des revendications précédentes,
**caractérisé en ce que**
l'élément de maintien (4) présente axialement des deux côtés en extrémité un bord continu (47, 148) sans interruption.

13. Connecteur de raccordement (1) selon l'une quelconque des revendications précédentes,
**caractérisé en ce que**
la partie de connecteur (2, 200) est pourvue d'au moins un dispositif (23, 202) de verrouillage par pression coopérant avec l'élément de maintien (4), qui empêche un déverrouillage de l'élément de maintien (4) en présence d'une pression de fluide à l'intérieur du connecteur de raccordement (1).

14. Connecteur (1) selon la revendication 13,
**caractérisé en ce que**
le dispositif de verrouillage par pression comprend au moins un élément (23, 202) en saillie depuis le côté extérieur de la section de réception (20, 201) de la partie de connecteur (2, 200), en particulier au moins une goupille en saillie ou au moins une bosse en saillie, et l'élément de maintien (4) comprend au moins une ouverture (145) dans au moins l'un de ses bras de maintien (42, 43), en particulier pour le verrouillage par pression de l'élément en saillie (23, 202) par déplacement de l'élément de maintien (4) par rapport à la partie de connecteur (2, 200) dans la direction axiale de l'élément de maintien (4) se trouve à l'extérieur d'une ouverture (145) dans l'élément de maintien (4) et bloque ainsi un mouvement radial du bras de maintien (42, 43) ou des bras de maintien (42, 43).

15. Ensemble d'un élément de maintien (4) et d'au moins un dispositif de verrouillage pour un connecteur de raccordement (1) selon l'une quelconque des revendications précédentes, comprenant au moins une partie de manchon (3, 300, 400) et au moins une partie de connecteur (2, 200), dans lequel la partie de connecteur (2, 200) peut être enfichée ou est enfichée dans une section de manchon (31, 302, 403) de la partie de manchon (3, 300, 400) et dans lequel l'élément de maintien (4) peut être monté ou est monté sur la partie de connecteur (2, 200) pour maintenir de manière détachable la partie de connecteur (2, 200) dans la partie de manchon (3, 300, 400),
**caractérisé en ce que**
l'élément de maintien (4) présente des bras de maintien (140, 141) avec des becs d'encliquetage (146, 147) orientés vers l'intérieur par rapport à l'élément de maintien (4) pour le maintien sur un talon ou élément de forme correspondante sur le côté extérieur d'une section de réception (20, 201) de la partie de connecteur (2) et des bras de maintien (42, 43) avec des becs d'encliquetage (40, 41) orientés vers l'extérieur par rapport à l'élément de maintien (4) pour l'encliquetage dans des ouvertures d'encliquetage de la partie de manchon (3, 300, 400), dans lequel l'au moins un dispositif de verrouillage est prévu pour sécuriser l'état d'encliquetage de la partie de connecteur (2, 200) et de la partie de manchon (3, 300, 400) et pour indiquer un mauvais montage de celles-ci, dans lequel l'au moins un dispositif de verrouillage est un élément de verrouillage (5) enfichable radialement qui coopère avec l'élément de maintien (4) dans la zone de l'au moins un bras de maintien (42, 43) de celui-ci et est mobile radialement par rapport à l'élément de maintien (4) et prémonté sur l'élément de maintien (4) et peut être déplacé d'une position de prémontage à une position de verrouillage.
